(19) Europäisches Patentamt
European Patent Office
Office européen des brevets

(11) **EP 4 224 768 A1**

(12) **EUROPEAN PATENT APPLICATION**
published in accordance with Art. 153(4) EPC

(43) Date of publication:
09.08.2023 Bulletin 2023/32

(51) International Patent Classification (IPC):
*H04L 5/00* (2006.01)

(21) Application number: 21874523.0

(22) Date of filing: 29.09.2021

(52) Cooperative Patent Classification (CPC):
H04L 5/00

(86) International application number:
PCT/CN2021/121659

(87) International publication number:
WO 2022/068868 (07.04.2022 Gazette 2022/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.09.2020 CN 202011063406

(71) Applicant: Vivo Mobile Communication Co., Ltd.
Dongguan, Guangdong 523863 (CN)

(72) Inventor: YANG, Yu
Dongguan, Guangdong 523863 (CN)

(74) Representative: Lavoix
Bayerstraße 83
80335 München (DE)

(54) **METHOD AND APPARATUS FOR DETERMINING UPLINK CHANNEL PARAMETERS, AND METHOD AND APPARATUS FOR CONFIGURING UPLINK CHANNEL PARAMETERS**

(57) This application provides a method and an apparatus for determining and configuring an uplink channel parameter. The method includes: receiving target indication information sent by a network-side device, where the target indication information includes at least one of the following: transmission configuration indicator state information and first indication information, and the transmission configuration indicator state information or the first indication information is used to indicate an uplink channel parameter for transmission of a physical uplink shared channel PUSCH; and determining the uplink channel parameter based on the target indication information.

Receive target indication information sent by a network-side device, where the target indication information includes at least one of the following: transmission configuration indicator state information and first indication information, and the transmission configuration indicator state information or the first indication information is used to indicate an uplink channel parameter for transmission on a physical uplink shared channel PUSCH — S202

Determine the uplink channel parameter based on the target indication information — S204

FIG. 2

## Description

### CROSS-REFERENCE TO RELATED APPLICATIONS

This application claims priority to Chinese Patent Application No. 202011063406.6, filed on September 30, 2020 in China, which is incorporated herein by reference in its entirety.

### TECHNICAL FIELD

This application pertains to the field of communications technologies, and in particular, to a method and an apparatus for determining and configuring an uplink channel parameter.

### BACKGROUND

In an existing mobile communications network, when a physical uplink shared channel (Physical Uplink Shared Channel, PUSCH) is scheduled for transmission, sounding reference signal (Sounding Reference Signal, SRS) resource information indicated by a sounding reference signal resource indicator (SRS Resource Indicator, SRI) field in downlink control information (Downlink Control Information, DCI) is used to determine channel parameter information of the PUSCH, for example, spatial relation information (spatial relation information, namely, analog beam information), port (port) information, and precoding information. It can be learned that in the prior art channel parameters of the PUSCH are all determined based on the SRI field. This results in a high SRI signaling overhead.

### SUMMARY

Embodiments of this application provide a method and an apparatus for determining and configuring an uplink channel parameter, so as to solve the problem of high SRI signaling overhead found when SRI signaling is used to determine uplink channel parameters required for PUSCH transmission in the prior art.

A first aspect provides a method for determining an uplink channel parameter. The method is executed by a terminal, and includes: receiving target indication information sent by a network-side device, where the target indication information includes at least one of the following: transmission configuration indicator state information and first indication information, and the transmission configuration indicator state information or the first indication information is used to indicate an uplink channel parameter for transmission of a physical uplink shared channel PUSCH; and determining the uplink channel parameter based on the target indication information.

A second aspect provides an apparatus for determining an uplink channel parameter, including: a first receiving module, configured to receive target indication information sent by a network-side device, where the target indication information includes at least one of the following: transmission configuration indicator state information and first indication information, and the transmission configuration indicator state information or the first indication information is used to indicate an uplink channel parameter for transmission of a physical uplink shared channel PUSCH; and a first determining module, configured to determine the uplink channel parameter based on the target indication information.

A third aspect provides a method for configuring an uplink channel parameter. The method is executed by a network-side device, and includes: sending target indication information to a terminal, where the target indication information includes at least one of the following: transmission configuration indicator state information and first indication information, and the transmission configuration indicator state information or the first indication information is used to indicate an uplink channel parameter for transmission of a physical uplink shared channel PUSCH.

A fourth aspect provides an apparatus for configuring an uplink channel parameter, including: a second sending module, configured to send target indication information to a terminal, where the target indication information comprises at least one of the following: transmission configuration indicator state information and first indication information, and the transmission configuration indicator state information or the first indication information is used to indicate an uplink channel parameter for transmission of a physical uplink shared channel PUSCH.

A fifth aspect provides a terminal. The terminal includes a processor, a memory, and a program or instructions stored in the memory and capable of running on the processor. When the program or instructions are executed by the processor, the steps of the method according to the first aspect are implemented.

A sixth aspect provides a network-side device. The network-side device includes a processor, a memory, and a program or instructions stored in the memory and capable of running on the processor. When the program or instructions are executed by the processor, the steps of the method according to the third aspect are implemented.

A seventh aspect provides a readable storage medium. The readable storage medium stores a program or instructions. When the program or instructions are executed by a processor, the method according to the first aspect or the method according to the third aspect is implemented.

An eighth aspect provides a chip. The chip includes a processor and a communications interface, where the communications interface is coupled to the processor, and the processor is configured to run a program or instructions to implement the steps of the method according to the first aspect or the steps of the method according to the third aspect.

A ninth aspect provides a computer program product, which is stored in a readable storage medium. The computer program product is executed by at least one processor to implement the method according to the first aspect, or the method according to the third aspect.

A tenth aspect provides an apparatus for determining an uplink channel parameter, which is used to implement the method according to the first aspect.

An eleventh aspect provides an apparatus for configuring an uplink channel parameter, which is used to implement the method according to the third aspect. In the embodiments of this application, a terminal can determine an uplink channel parameter for scheduling transmission of a PUSCH based on transmission configuration indicator state information and/or first indication information. This avoids using SRI signaling to determine an uplink channel parameter required for transmission of the PUSCH in the prior art, thereby saving SRI signaling overhead and implementing PUSCH scheduling and transmission.

## BRIEF DESCRIPTION OF DRAWINGS

FIG. 1 is a block diagram of a wireless communications system to which embodiments of this application are applicable;
FIG. 2 is a flowchart of a method for determining an uplink channel parameter according to an embodiment of this application;
FIG. 3 is a schematic structural diagram of an apparatus for determining an uplink channel parameter according to an embodiment of this application;
FIG. 4 is a schematic structural diagram of a communications device according to an embodiment of this application;
FIG. 5 is a schematic structural diagram of a terminal according to an embodiment of this application; and
FIG. 6 is a schematic structural diagram of a network-side device according to an embodiment of this application.

## DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, "and/or" in this specification and claims indicates at least one of connected objects, and the symbol "/" generally indicates that the associated objects are in an "or" relationship.

It should be noted that the technologies described in the embodiments of this application are not limited to long term evolution (Long Term Evolution, LTE)/LTE-Advanced (LTE-Advanced, LTE-A) systems, and may also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the above-mentioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

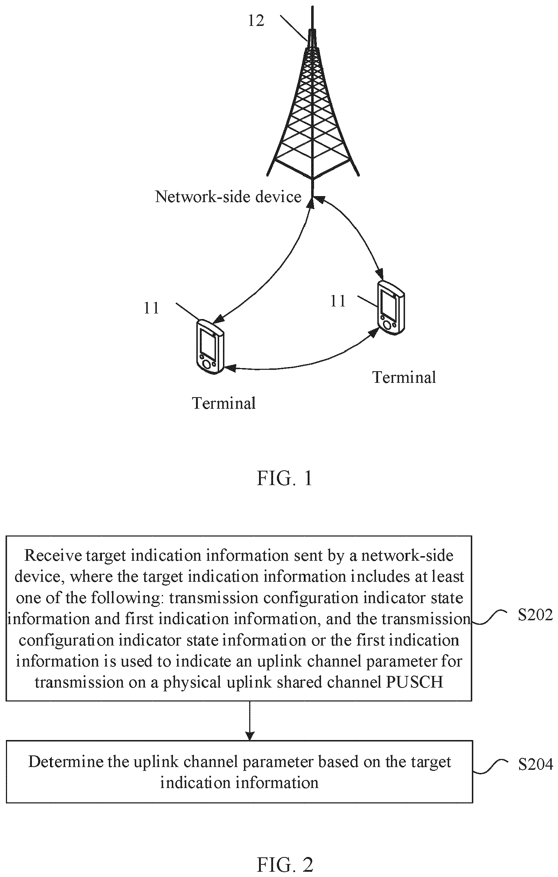

FIG. 1 is a block diagram of a wireless communications system to which embodiments of this application are applicable. The wireless communications system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), or pedestrian user equipment (PUE). The wearable device includes: a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (eNB), a home NodeB, a home evolved NodeB, a WLAN access point, a Wi-Fi node, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

Related technologies in this application will be explained below.

1. Beam measurement and beam reporting (beam measurement and beam reporting)

Analog beamforming is based on full-bandwidth transmission, and an array element of each polarization direction on a panel of each high-frequency antenna array can transmit analog beams only in a time-division multiplexing manner. A beamforming weight of the analog beam is implemented by adjusting parameters of devices such as a phase shifter on the radio frequency frontend.

At present, in the academia and industrial fields, a polling manner is usually used for training of analog beamforming vectors, that is, the array element of each polarization direction of each antenna panel sends a training signal (that is, a candidate beamforming vector) sequentially at agreed times in a time-division multiplexing manner. A terminal feeds back a beam report after measurement, so that the network side can use the training signal to implement analog beam transmission for transmitting a next service. The content of the beam report generally includes identifiers of several optimal transmit beams and a measured received power of each transmit beam.

During beam measurement (beam measurement), the network configures a reference signal resource set (RS resource set) that includes at least one reference signal resource, such as an SSB resource or a CSI-RS resource. A UE performs measurement on layer 1 reference signal received power/layer 1 signal to interference plus noise ratio (Layer 1 Reference Signal Received Power/Layer 1 Signal to Interference plus Noise Ratio, L1-RSRP/L1-SINR) of each RS resource, and reports at least one optimal measurement result to the network. The report content includes an SSB resource indicator (SSB Resource Indicator, SSBRI) or a CSI-RS resource indicator (CSI-RS Resource Indicator, CRI), and L1-RSRP/L1-SINR. The report content reflects at least one optimal beam and quality hereof, so that the network determines information of a beam used for channel or signal transmission with the UE.

2. Beam indication (beam indication) mechanism

After beam measurement and beam reporting, the network may perform beam indication for downlink and uplink channels or reference signals, so as to establish beam links between the network and the LTE, thereby implementing channel or reference signal transmission.

With regard to beam indication for physical downlink control channels (Physical Downlink Control Channel, PDCCH), the network configures K transmission configuration indication (Transmission Configuration Indication, TCI) states (states) for each control resource set (Control Resource Set, CORESET) by using radio resource control (Radio Resource Control, RRC) signaling. When K > 1, one TCI state is indicated or activated by a media access control (Media Access Control, MAC) control element (Control Element, CE); and when K = 1, no additional MAC CE command is required. When monitoring a PDCCH, the LTE uses the same Quasi-colocation (Quasi-colocation, QCL) for all search spaces (search space) of a CORESET, that is, using the same TCI state for monitoring the PDCCH. A reference signal (Reference Signal, RS) (for example, a periodic CSI-RS resource, a semi-persistent CSI-RS resource, or an SS block) in the TCI state is spatially QCLed with a LTE-specific PDCCH demodulation reference signal (Demodulation Reference Signal, DMRS) port. According to the TCI state, the UE may learn which receive beam is used for receiving the PDCCH.

For beam indication of a physical downlink shared channel (Physical Downlink Shared Channel, PDSCH), the network configures M TCI states by using RRC signaling, uses a MAC CE command to activate $2^N$ TCI states, and then uses an N-bit TCI fieldof DCI to notify the TCI state, where an RS in the TCI state and a DMRS port of the PDSCH to be scheduled are QCLed. According to the TCI state, the UE may learn which receive beam is used for receiving the PDSCH.

With regard to beam indication for channel state information reference signals (Channel State Information Reference Signal, CSI-RS), when a CSI-RS type is periodic CSI-RS, the network configures QCL information for a CSI-RS resource by using RRC signaling. When a CSI-RS type is a semi-persistent CSI-RS, the network indicates its QCL information when activating one CSI-RS resource from an RRC-configured CSI-RS resource set by using a MAC CE command. When a CSI-RS type is an aperiodic CSI-RS, the network configures QCL for a CSI-RS resource by using RRC signaling, and triggers the CSI-RS by using DCI.

For beam indication of a physical uplink control channel (Physical Uplink Control Channel, PUCCH), the network uses RRC signaling to configure spatial relation information (spatial relation information) for each PUCCH resource by using a parameter PUCCH-SpatialRelationInfo. When a plurality of pieces of spatial relation information are configured for the PUCCH resource, the network uses a MAC CE to indicate or activate one piece of spatial relation information. When only one piece of spatial relation information is configured for the PUCCH resource, no additional MAC CE command is required.

For beam indication of a PUSCH, spatial relation information of the PUSCH is indicated as follows: When the PUSCH is scheduled by using DCI carried by the PDCCH, each SRI codepoint of a sounding reference signal resource indicator (Sounding Reference Signal resource indicator, SRI) field in the DCI indicates one SRI, and the SRI is used to indicate the spatial relation information of the PUSCH.

With regard to beam indication for sounding reference signals (Sounding Reference Signal, SRS), when an SRS type is periodic SRS, the network configures spatial relation information for an SRS resource by using RRC signaling. When the SRS is semi-persistent SRS, the network activates, by using a MAC CE command, one of a group of spatial relation information configured by using RRC signaling. When an SRS type is aperiodic SRS, the network configures spatial relation information for an SRS resource by using RRC signaling, and further updates spatial relation information of an aperiodic SRS resource by using a MAC CE command.

3. Scheduling process of PUSCH transmission

PUSCH transmission schemes include codebook based transmission (codebook based transmission) and non-codebook based transmission (non-codebook based transmission). When a value of txConfig in a high-layer parameter pusch-Config is 'codebook', the network configures codebook based transmission for a UE. When the value of txConfig in the high-layer parameter pusch-Config is 'noncodebook', the network configures non-codebook based transmission for a LTE.

1) Main steps of codebook based transmission are as follows:
Step S11. A UE sends an SRS to a base station. The SRS is used by the network to obtain uplink CSI.

Only one SRS resource set for a codebook is supported, and each SRS resource set includes at most two SRS resources, and the two SRS resources include a same quantity of ports, which is 1, 2, or 4 ports.

Step S12. The base station performs uplink channel detection based on the SRS, performs resource scheduling on the UE, and determines an SRS resource corresponding to uplink transmission, and a quantity of layers and a precoding matrix for uplink transmission. Further, based on a precoding matrix indicator (Transmitted Precoding Matrix Indicator, TPMI) and channel information, the base station determines an MCS for uplink transmission, and then the base station notifies the UE of PUSCH resource allocation and a corresponding modulation and coding scheme (Modulation and Coding Scheme, MCS), a TPMI, a rank indicator (Rank Indicator, RI) and a corresponding SRS resource indicator.

For SRI in DCI: $\lceil \log_2(N_{SRS}) \rceil$ bit , $N_{SRS}$ refers to a quantity of SRS resources included in the SRS resource set. If two SRS resources are configured, the first SRS resource or the second SRS resource is indicated. If only one SRS resource is configured, this field is default.

TPMI in DCI: 0-6 bits. This depends on a quantity of ports in the SRS, codebookSubset (codebooksubset), fullyAndPartialAndNonCoherent (fullyAndPartialAndNonCoherent), partialAndNonCoherent (partialAndNonCoherent), and noncoherent (nonCoherent) configured in PUSCH-config.

RRC configuration of CG does not include the codebookSubset parameter, so the parameter in pusch-config needs to be reused.

The TPMI determines a quantity of layers, which is equivalent to joint encoding (joint encoding). However, a maximum quantity of layers is determined based on a port quantity in the SRS resource and allowable maxRANK in pusch-config that is configured.

SRI of configuredGrantConfig in RRC (SRI of configuredGrantConfig in RRC): 0-15 because one SRS resource set supports at most 16 SRS resources. That is, maxNrofSRS-ResourcePerSet = 16.

TPMI of configuredGrantConfig in RRC (TPMI of configuredGrantConfig in RRC): 0-63, with a maximum of 6 bits.

Step S13. The UE performs modulation and coding on data based on the MCS indicated by the network, determines, by using the indicated SRI, TPMI, and RI, the precoding matrix and the quantity of layers for transmission to be used for data transmission, and then precodes and sends the data. A demodulation pilot signal of the PUSCH and data of the PUSCH adopt a same precoding method. That is, DMRS and data use the same precoding.

Step S14. The base station estimates an uplink channel based on the DMRS and performs data detection.

2) Steps of non-codebook based transmission are as follows:
Step S21. A UE measures a downlink reference signal to obtain a candidate uplink precoding matrix, precodes an SRS for a non-codebook transmission scheme, and then transmits it to a base station.

Only one SRS resource set is supported, and each SRS resource set includes at most 4 SRS resources. Only a single port is supported.

This downlink reference signal is an NZP CSI-RS resource used for channel measurement CM, which is associated in the SRS resource set.

It should be noted that a CSI-RS in the embodiments of this application may not be associated with a corresponding RS. That is, a terminal can select a precoding and attach it to an SRS resource.

Step S22. The base station performs uplink channel detection based on the SRS sent by the UE, performs resource scheduling for the UE, determines an SRS resource corresponding to uplink transmission and an MCS level of the uplink transmission, and notifies, by using an SRI indicator, the UE of the SRS resource corresponding to the uplink transmission.

For          SRI          in          DCI:

$$\left\lceil \log_2 \left( \sum_{k=1}^{\min\{L_{\max}, N_{SRS}\}} \binom{N_{SRS}}{K} \right) \right\rceil \text{ bits}$$

, $N_{SRS}$ refers to a quantity of SRS resources included in the SRS resource set. $L_{max}$ is indicated by maxMIMO-Layers carried in a high-layer parameter PUSCH-ServingCellConfig. If not configured, Lmax is provided by $N_{SRS}$, that is, $L_{max} = N_{SRS}$.

TPMI in DCI (TPMIs in DCI): 0 bit

SRI in RRC (SRI in RRC): 0-15 because one SRS resource set supports at most 16 SRS resources. That is, maxNrofSRS-ResourcePerSet = 16. Overhead is highest when $N_{SRS}=L_{max}=4$, which is 4+6+4+1=15 and therefore 4 bits.

TPMI in RRC (TPMI in RRC): 0-63, with a maximum of 6 bits.

Step S23. The UE performs modulation and coding on data based on the MCS sent by the base station, determines, by using the SRI, the precoding matrix and the quantity of layers for transmission of the data, and then precodes and sends the data.

ADMRS of the PUSCH is the same as the precoding of the data. In addition, the quantity of the SRS resources indicated by the SRI is a quantity of ranks for PUSCH transmission. PUSCH transmission layers are in one-to-one mapping with the SRS resources indicated by the SRI.

Step S24. The base station estimates an uplink channel based on the DMRS and performs data detection.

It should be noted that beam information in this application may also be referred to as: spatial relation (spatial relation) information, spatial domain transmission filter (spatial domain transmission filter) information, spatial filter (spatial filter) information, transmission configuration indicator state (TCI state) information, quasi-colocation (QCL) information, a QCL parameter, or the like. Downlink beam information may be generally represented by the TCI state information or QCL information. Uplink beam information may be generally represented by the spatial relation information.

In this application, the antenna panel may also be referred to as: an antenna group, an antenna port group, an antenna set, an antenna port set, a beam set, a beam sub-set, an antenna array, an antenna port array, an antenna sub-array, an antenna port sub-array, a logical entity, an entity, an antenna entity, or the like.

An identifier of a Panel (panel) may be: an antenna panel identifier, a reference signal resource identifier, a reference signal resource set identifier, a TCI state identifier, a QCL information identifier, a spatial relation identifier, or the like.

The following specifically describes the method for determining an uplink channel parameter provided in embodiments of this application through specific embodiments and application scenarios thereof with reference to the accompanying drawings.

An embodiment of this application provides a method for determining an uplink channel parameter, which is executed by a terminal. FIG. 2 is a flowchart of the method for determining an uplink channel parameter according to the embodiment of this application. As shown in FIG. 2, the method includes the following steps.

Step S202. Receive target indication information sent by a network-side device. The target indication information includes at least one of the following: transmission configuration indicator state information and first indication information, and the transmission configuration indicator state information or the first indication information is used to indicate an uplink channel parameter for transmission of a physical uplink shared channel PUSCH.

Step S204. Determine the uplink channel parameter based on the target indication information.

Through step S202 and step S204 in the embodiment of this application, a terminal can determine an uplink channel parameter for transmission of a PUSCH based on transmission configuration indicator state information and/or first indication information. This avoids using SRI signaling to determine an uplink channel parameter required for transmission of the PUSCH in the prior art, thereby saving SRI signaling overhead and implementing PUSCH scheduling and transmission.

The following describes in detail the foregoing step S202 and step S204 in this application with reference to specific application scenarios. The application scenarios in the embodiment of this application include codebook based scheduling of PUSCH transmission and non-codebook based scheduling of PUSCH transmission, and during PUSCH transmission, a network-side device may configure an SRS resource or may not configure an SRS resource. Details will be described in the following manners.

   1) transmission of a PUSCH is scheduled based on codebook, and no SRS resource is configured by the network side.

In a case that the PUSCH is a PUSCH scheduled based on a codebook and no sounding reference signal SRS resource is configured for the terminal by the network-side device, the determining the uplink channel parameter based on the target indication information in step S204 in the embodiment of this application includes at least one of the following:

Step S204-11. Determine beam information of the PUSCH based on the transmission configuration indicator state information.

Step S204-12. Determine precoding information based on the first indication information. The first indication information includes precoding information in downlink control information DCI.

It can be learned that the beam information and the precoding information of the PUSCH in the uplink channel parameter can be determined through the foregoing steps, and a port quantity in the uplink channel parameter can be implemented in the following manners: determining a port quantity of the PUSCH based on the transmission configuration indicator state information, where the transmission configuration indicator state information is associated with the port quantity of the PUSCH; alternatively, determining the port quantity of the PUSCH based on the first indication information or a protocol specification.

It should be noted that a preset mapping is present between the port quantity and a format of the DCI in the embodiment of this application, and the preset mapping is specified by a protocol or configured by the network-side device. In addition, an association relationship is also present between the precoding information and the port quantity in the embodiment of this application.

2) transmission of a PUSCH is scheduled based on a codebook, and an SRS resource is configured by the network side.

In this application scenario, the SRS resource includes at least one of the following:

1) one first SRS resource configured by the network-side device;

2) at least one of a plurality of second SRS resources having a same port quantity and configured by the network-side device;

3) at least one of a plurality of third SRS resources configured by the network-side device, where at least two of the plurality of third SRS resources have different port quantities; and

4) at least one of a plurality of fourth SRS resources configured by the network-side device, where at least two of the plurality of fourth SRS resources have different port quantities; at least one piece of the transmission configuration indicator state information is associated with at least one of the plurality of fourth SRS resources, or at least one of the plurality of fourth SRS resources is configured in at least one piece of the transmission configuration indicator state information.

Based on the foregoing SRS resource, the determining the uplink channel parameter based on the target indication information in step S204 in the embodiment of this application includes at least one of the following:

Step S204-21. Determine beam information of the PUSCH based on the transmission configuration indicator state information.

Step S204-32. Determine an SRS resource based on the transmission configuration indicator state information or the first indication information.

Step S204-33. Determine a port quantity of the PUSCH based on a port quantity of the SRS resource.

Step S204-34. Determine precoding information based on the first indication information.

In an optional implementation of the embodiment of this application, the SRS resource is configured in the transmission configuration indicator state information, or the transmission configuration indicator state information is associated with the SRS resource. Based on this, an association relationship is present between the precoding information and the SRS resource, and beam information of the SRS resource is determined based on the transmission configuration indicator state information.

With reference to specific implementations 1 to 8, the following describes the manners of determining an uplink channel parameter during codebook based scheduling of PUSCH transmission by using examples.

Implementation 1: During codebook based scheduling of PUSCH transmission, in a case that no sounding reference signal SRS resource is configured for a terminal by the network-side device, the target indication information is the transmission configuration indicator state information and the first indication information. The determining the uplink channel parameter based on the target indication information in step S204 in the embodiment of this application may further include: determining a port quantity and beam information of the PUSCH based on the transmission configuration indicator state information, and determining precoding information based on the first indication information, where the transmission configuration indicator state information is associated with the port quantity of the PUSCH, and the first indication information includes precoding information in downlink control information DCI.

It should be noted that an association relationship is present between the precoding information and a port quantity associated with the transmission configuration indicator state information. That is, after the associated port quantity is determined based on the transmission configuration indicator state information, the precoding information is obtained from the DCI in the first indication information based on the port quantity. In addition, the precoding information in the embodiment of this application includes a precoding matrix, rank information, and the like (indicated by TPMI signaling).

A specific application scenario for implementation 1 may be as follows.

Step S11. A TCI state pool is preconfigured by the network-side device, and a TCI state (transmission configuration indicator state) therein is indicated for the terminal. The TCI state in the configured pool is associated with a port quantity, for example, 1 port, 2 ports, and 4 ports.

Step S12. The terminal acquires beam information and port information (for example, the port quantity) of the PUSCH based on the TCI state indicated by the network-side device.

Step S13. Based on the acquired port quantity, the terminal can acquire a quantity of ports in TPMI information indicated by the TPMI field (for example, read an index in the TPMI field based on the port quantity) when determining TPMI in DCI information.

It can be learned that in implementation 1, the port quantity can be determined based on the TCI state. Then the precoding information, which is determined through uplink measurement (for example, DMRS measurement) by the network-side device and corresponds to the determined port quantity, is sent to the terminal based on the first indication information. In this way, SRI signaling is not required for determining a channel parameter during PUSCH transmission, which saves SRI signaling overhead.

Implementation 2: During codebook based scheduling of PUSCH transmission, in a case that no sounding reference signal SRS resource is configured for a terminal by the network-side device, the target indication information is the transmission configuration indicator state information and the first indication information. The determining the uplink channel parameter based on the target indication information in step S204 in the embodiment of this application may further include: determining beam information of the PUSCH based on the transmission configuration indicator state information, and determining a port quantity and precoding information based on the first indication information, where the first indication information is used to indicate the port quantity of the PUSCH, and the first indication information includes precoding information in downlink control information DCI.

It can be learned that in implementation 2, an uplink channel parameter, for example, the beam information, the port quantity, and the precoding information, is determined based on a combination of the TCI state and the first indication information. In this way, SRI signaling is not required for determining a channel parameter during PUSCH transmission, which saves SRI signaling overhead.

Implementation 3: During codebook based scheduling of PUSCH transmission, in a case that no sounding reference signal SRS resource is configured for a terminal by the network-side device, the target indication information is the transmission configuration indicator state information and the first indication information, and a port quantity of the PUSCH is specified by a protocol. The determining the uplink channel parameter based on the target indication information in step S204 in the embodiment of this application may further include:

determining beam information of the PUSCH based on the transmission configuration indicator state information, and determining precoding information based on the first indication information, where the first indication information includes precoding information in downlink control information DCI.

In implementation 3, the port quantity is specified by a protocol. That is, the first indication information needs to indicate only the precoding information.

It should be noted that in the foregoing implementations 2 and 3, an association relationship is present between the precoding information and the port quantity indicated by the first indication information or the port quantity specified by the protocol.

It can be learned that in implementation 3, an uplink channel parameter, for example, the beam information, the port quantity, and the precoding information, is determined based on a combination of the TCI state and the first indication information. In this way, SRI signaling is not required for determining a channel parameter during PUSCH transmission, which saves SRI signaling overhead.

Implementation 4: During codebook based scheduling of PUSCH transmission, in a case that no sounding reference signal SRS resource is configured for a terminal by the network-side device, the target indication information is the transmission configuration indicator state information and the first indication information. The determining the uplink channel parameter based on the target indication information in step S204 in the embodiment of this application may further include: determining beam information of the PUSCH based on the transmission configuration indicator state information, and determining a port quantity of the PUSCH and precoding information based on the first indication information.

The transmission configuration indicator state information is used to indicate the beam information of the PUSCH, the first indication information is used to indicate the port quantity of the PUSCH, and the first indication information includes the precoding information in DCI. A preset mapping is present between the port quantity and a format of the DCI, and the preset mapping is specified by a protocol or configured by the network-side device.

A specific application scenario for implementation 4 may be as follows.

Step S21. A port quantity is configured by the network-side device.

Step S22. Based on the configured port quantity, the network-side device uses a corresponding DCI format (format) for scheduling transmission of a PUSCH. In addition, the network-side device uses a MAC CE command or DCI signaling to indicate beam information (for example, TCI state information) of the PUSCH.

For example, if one port is preconfigured, DCI format 0_0 is used, and if two ports are configured, DCI format 0_1 is used.

Step S23. Acquire precoding information based on a port quantity and a TPMI field in DCI, where the first indication information indicates the precoding information.

It can be learned that in implementation 4, an uplink channel parameter, for example, the beam information, the port quantity, and the precoding information, is determined based on a combination of the TCI state and the first indication information. In this way, SRI signaling is not required for determining a channel parameter during PUSCH transmission, which saves SRI signaling overhead.

Implementation 5: During codebook based scheduling of PUSCH transmission, in a case that one first SRS resource is configured by the network-side device, the target indication information is the transmission configuration indicator state information and the first indication information, where the first SRS resource is configured in the transmission configuration indicator state information, or the transmission configuration indicator state information is associated with the first SRS resource, and the first indication information includes precoding information in DCI.

The determining the uplink channel parameter based on the target indication information in step S204 in the embodiment of this application may further include the following.

Step S51. Determine beam information of the PUSCH and a first SRS resource based on the transmission configuration indicator state information.

Step S52. Determine a port quantity of the PUSCH based on a port quantity of the first SRS resource.

Step S53. Determine precoding information based on the first indication information.

It should be noted that in implementation 5, the precoding information is obtained through measurement on the first SRS resource by the network-side device. Beam information of the first SRS resource is determined based on the transmission configuration indicator state information.

A specific application scenario for implementation 5 may be that: if one SRS resource is configured by the network, the UE sends, based on TCI state information of the PUSCH indicated by the network, an SRS resource configured in a TCI state or associated with the TCI state, so that the SRS resource is measured by the network-side device.

The beam information of the SRS resource is configured in the SRS resource by the network or determined based on the TCI state of the PUSCH indicated by the network-side device. In addition, in a case that the SRS resource is a periodic SRS resource, the beam information of the SRS resource may be determined based on the TCI state of the PUSCH indicated by the network-side device. Further, the network-side device indicates the precoding information in the DCI based on a measurement result, where the precoding information is indicated to the terminal by the first indication information.

It can be learned that in implementation 5, an uplink channel parameter, for example, the beam information, the port quantity, and the precoding information, is determined based on a combination of the TCI state and the first indication information. In this way, SRI signaling is not required for determining a channel parameter during PUSCH transmission, which saves SRI signaling overhead.

Implementation 6: During codebook based scheduling of PUSCH transmission, in a case that a plurality of second SRS resources having a same port quantity are configured by the network-side device, the target indication information is the transmission configuration indicator state information and the first indication information, where at least one of the second SRS resources is configured in the transmission configuration indicator state information, or the transmission configuration indicator state information is associated with at least one of the second SRS resources, and the first indication information includes precoding information in DCI.

The determining the uplink channel parameter based on the target indication information in step S204 in the embodiment of this application may further include the following.

Step S204-61. Determine beam information of the PUSCH and at least one second SRS resource based on the transmission configuration indicator state information.

Step S204-62. Determine a port quantity of the PUSCH based on a port quantity of the at least one second SRS resource.

Step S204-63. Determine precoding information based on the first indication information.

In implementation 6, the precoding information is obtained through measurement on the at least one second SRS resource by the network-side device. Beam information of the at least one second SRS resource is determined based on the transmission configuration indicator state information.

A specific application scenario for implementation 6 may be that: if a plurality of SRS resources having the same port information are configured by the network-side device, the terminal sends at least one of the SRS resources for measurement by the network-side device. The beam information of the plurality of SRS resources is configured in the SRS resources by the network, or determined by the terminal, or determined based on a TCI state of the PUSCH indicated by the network. In addition, in a case that the SRS resource is a periodic SRS resource, the beam information of the SRS resource may be determined based on the TCI state of the PUSCH indicated by the network.

Therefore, the network-side device can indicates the precoding information in the DCI based on a measurement result, and the precoding information is indicated to the terminal by the first indication information. The beam information of the PUSCH may be determined based on one piece of TCI state information or one SRS resource indicated by the network.

When one piece of TCI state information is indicated, one of the plurality of SRS resources may be used as a source RS.

It can be learned that in implementation 6, an uplink channel parameter, for example, the beam information, the port quantity, and the precoding information, is determined based on a combination of the TCI state and the first indication information. In this way, SRI signaling is not required for determining a channel parameter during PUSCH transmission, which saves SRI signaling overhead.

Implementation 7: During codebook based scheduling of PUSCH transmission, in a case that a plurality of third SRS resources are configured by the network-side device and at least two of the plurality of third SRS resources have different port quantities, the target indication information is the transmission configuration indicator state information and the first indication information, where the first indication information includes a sounding reference signal resource indicator SRI and precoding information in DCI.

The determining the uplink channel parameter based on the target indication information in step S204 in the embodiment of this application may further include the following.

Step S204-71. Determine beam information of the PUSCH based on the transmission configuration indicator state information; determine port quantity of the PUSCH based on an SRI in the first indication information; and determine precoding information based on the first indication information.

It should be noted that in implementation 7, the precoding information is obtained through measurement on the plurality of third SRS resources by the network-side device. Beam information of the plurality of third SRS resources is determined based on the transmission configuration indicator state information.

A specific application scenario for implementation 7 may be that: a plurality of SRS resources for codebook are configured by the network, and these SRS resources have different port settings.

Step S71. The network-side device indicates a TCI state of the PUSCH.

Step S72. Determine beam information of a plurality of SRS resources based on the TCI state.

Step S73. The terminal sends the plurality of SRS resources for measurement by the network-side device.

Step S74. Based on a measurement result, the network-side device indicates one piece of SRS resource information (for example, using an SRI field) in DCI to determine port information of the PUSCH, and indicate precoding information in the DCI corresponding to the port information.

It can be learned that in implementation 7, an uplink channel parameter, for example, the beam information, the port quantity, and the precoding information, is determined based on a combination of the TCI state and the first indication information. In this way, SRI signaling is not required for determining all channel parameters during PUSCH transmission, and PUSCH scheduling can be performed properly.

Implementation 8: During codebook based scheduling of PUSCH transmission, in a case that a plurality of fourth SRS resources are configured by the network-side device and at least two of the plurality of fourth SRS resources have different port quantities, the target indication information is the transmission configuration indicator state information and the first indication information, the first indication information includes precoding information in DCI, and the transmission configuration indicator state information is one piece of the transmission configuration indicator state information in a transmission configuration indicator state pool configured by the network-side device. At least one of the plurality of fourth SRS resources is configured in at least one piece of transmission configuration indicator state information in the transmission configuration indicator state pool, or at least one piece of transmission configuration indicator state information is associated with at least one of the plurality of fourth SRS resources.

The determining the uplink channel parameter based on the target indication information in step S204 in the embodiment of this application may further include the following.

Step S204-31. Determine beam information of the PUSCH and a corresponding fourth SRS resource based on the transmission configuration indicator state information.

Step S204-32. Determine a port quantity of the PUSCH based on the fourth SRS resource.

Step S204-33. Determine precoding information based on the first indication information.

It should be noted that in implementation 8, the precoding information is obtained through measurement on the plurality of SRS resources by the network-side device. Beam information of the SRS resources is determined based on the transmission configuration indicator state information, corresponding to the SRS resource, in the transmission configuration indicator state pool.

A specific application scenario for implementation 8 may be that: a plurality of SRS resources for codebook are configured by the network-side device, and these SRS resources have different port settings.

Step S81. A plurality of pieces of TCI state information are configured or indicated by the network-side device, where the plurality of pieces of TCI state information includes or is associated with a plurality of pieces of SRS resource information.

Step S82. Based on the plurality of pieces of TCI state information, the terminal determines beam information of the plurality of SRS resources, and sends the plurality of SRS resources for measurement by the network-side device.

Step S83. The network-side device indicates a TCI state (one of a plurality of TCI states) of the PUSCH to obtain corresponding SRS resource information, determines port information of the PUSCH based on the corresponding SRS resource, and further determines precoding information based on DCI.

It should be noted that before the receiving target indication information sent by a network-side device, the method in the embodiment of this application further includes:

in a case that a port quantity of the SRS resource configured by the network-side device does not match the port quantity of the PUSCH, receiving configuration information sent by the network-side device, where the configuration information is used for reconfiguration of the port quantity of the SRS resource; or determining the port quantity of the SRS resource based on a port quantity associated with the transmission configuration indicator state information in the target indication information.

That is, in this application, in a case that port information of the SRS resource configured by the network-side device is irrelevant to port information of the PUSCH, the port quantity of the SRS resource needs to be changed to the configured or indicated port quantity.

2) Non-codebook based PUSCH transmission

During non-codebook based scheduling of PUSCH transmission, the target indication information is the transmission configuration indicator state information and the first indication information. The determining the uplink channel parameter based on the target indication information in step S204 in the embodiment of this application includes the following.

Step S204-41. Determine beam information of the PUSCH based on the transmission configuration indicator state information; or
Step S204-42. Determine beam information of the PUSCH based on the first indication information.

That is, during non-codebook based scheduling of PUSCH transmission, the beam information may be determined based on the transmission configuration indicator state information or the first indication information.

Further, a manner of determining beam information of the PUSCH based on the first indication information may be determining the beam information of the PUSCH based on an SRI of DCI in the first indication information. That is, the beam information of the PUSCH is determined based on the SRI of the DCI in the first indication information.

In addition, the SRI of the DCI in the first indication information according to the embodiment of this application may also be used to determine at least one of a port quantity and precoding information of the PUSCH.

In another optional implementation of the embodiment of this application, in a case that a dummy SRS resource in an association relationship with the uplink channel parameter is configured by the network-side device, an SRI of DCI in the first indication information may also be used to indicate the dummy SRS resource. It should be noted that a dummy SRS resource may be configured by the network-side device during codebook based scheduling of PUSCH transmission or during non-codebook based scheduling of PUSCH transmission. Further, a port quantity and/or precoding information of the PUSCH may be determined based on the dummy SRS resource indicated by the SRI in the DCI.

Based on this, before the determining at least one of a port quantity and precoding information of the PUSCH based on the SRI in the DCI, the method further includes the following.

Step S206. Send a precoded SRS resource to the network-side device.

Step S207. Receive the DCI sent by the network-side device. Precoding information in the DCI is obtained through measurement on the precoded SRS resource by the network-side device.

The SRS resource includes at least one of the following: 1) an SRS resource associated with a first CSI-RS resource, where a source reference signal RS of the first CSI-RS resource is a source RS in the transmission configuration indicator state information; and 2) an SRS resource associated with a CSI-RS resource in the transmission configuration indicator state information.

With reference to specific implementations 1 and 2, the following describes the manners of determining a channel parameter during non-codebook based PUSCH transmission by using examples.

Implementation 1: During non-codebook based scheduling of PUSCH transmission, the target indication information is the transmission configuration indicator state information and the first indication information, and the first indication information includes an SRI in DCI.

The determining the uplink channel parameter based on the target indication information in step S204 in the embodiment of this application may further include the following.

Step S204-51. Determine beam information of the PUSCH based on the transmission configuration indicator state information; or determine beam information of the PUSCH based on an SRI of DCI in the first indication information.

Step S204-52. Determine at least one of a port quantity and precoding information of the PUSCH based on the SRI in the DCI.

In an optional implementation of the embodiment of this application, before the determining at least one of a port quantity and precoding information of the PUSCH based on the SRI in the DCI, the method in the embodiment of this application may further include the following.

Step S91. Determine that a source reference signal RS in the transmission configuration indicator state information is a source RS of a first CSI-RS resource, where the first CSI-RS resource is associated with an SRS resource configured by the network-side device.

Step S92. Send a precoded SRS resource to the network-side device based on a measurement result of the first CSI-RS resource, and receive DCI sent by the network-side device, where beam information of the SRS resource is determined based on the transmission configuration indicator state information.

A specific application scenario for implementation 1 may be as follows.

Step S101. The network-side device indicates a TCI state. A source RS of the TCI state is an SSB or a CSI-RS.

Step S102. Change a QCL source RS (a beam corresponding to an SRS source) of a first CSI-RS resource corresponding to associatedCSI-RS in SRS resource configuration information to an SSB or a CSI-RS in the TCI state.

Step S103. The terminal measures the first CSI-RS resource, and sends a precoded SRS resource based on a measurement result, and the network-side device measures the precoded SRS resource and determines precoding information of the PUSCH.

Step S 104. The network-side device indicates the SRS resource information (SRI field) in the DCI to determine the precoding information of the PUSCH.

Implementation 2: During non-codebook based scheduling of PUSCH transmission, the target indication information is the transmission configuration indicator state information and the first indication information, and the first indication information includes an SRI in DCI.

The determining the uplink channel parameter based on the target indication information in step S204 in the embodiment of this application may further include the following.

Step S204-61. Determine beam information of the PUSCH based on the transmission configuration indicator state information.

Step S204-62. Determine at least one of a port quantity and precoding information of the PUSCH based on the SRI in the DCI.

In an optional implementation of the embodiment of this application, before the determining at least one of a port quantity and precoding information of the PUSCH based on the SRI in the DCI in the first indication information, the method in the embodiment of this application may further include the following.

Step S111. Send a precoded SRS resource based on a CSI-RS resource in the transmission configuration indicator state information.

Step S 112. Receive DCI sent by the network-side device. The precoding information in the DCI is obtained through measurement on the SRS resource by the network-side device. Beam information of the SRS resource is determined based on the transmission configuration indicator state information.

A specific application scenario for implementation 2 may be as follows.

Step S121. Determine beam information of an SRS resource based on a source RS in a TCI state indicated by the network-side device in a case that a parameter associatedCSI-RS in the SRS resource is not configured by the network-side device or a configured parameter associatedCSI-RS is not valid. In this case, the source RS in the TCI state is a CSI-RS.

Step S122. The terminal sends a precoded SRS resource, and the network-side device measures the precoded SRS resource and determines precoding information of the PUSCH.

Step S123. The network-side device indicates the SRS resource information (SRI field) in the DCI to determine the precoding information of the PUSCH.

Except for the codebook based and non-codebook based scheduling of PUSCH transmission described above, the target indication information may also be the transmission configuration indicator state information alone in the embodiment of this application. Based on this, the determining the uplink channel parameter based on the target indication information in step S204 in the embodiment of this application includes at least one of the following:

1) in a case that a source RS in the transmission configuration indicator state information is a downlink RS, determining that the downlink RS is a reference signal for first power control parameter information;

2) in a case that a source RS in the transmission configuration indicator state information is an uplink RS, determining that a source RS of the uplink RS or a downlink RS corresponding to the uplink RS is a reference signal for the first power control parameter information;

3) in a case that no source RS is present in the transmission configuration indicator state information, determining that a preset downlink RS is a reference signal for the first power control parameter information; and

4) determining a reference signal for the first power control parameter information based on a preset mapping relationship and the transmission configuration indicator state information, where the preset mapping relationship is used to indicate a mapping relationship between the transmission configuration indicator state information and the reference signal for the first power control parameter information.

The first power control parameter may be Pathloss RS (pathloss reference signal).

Except for the codebook based and non-codebook based scheduling of PUSCH transmission described above, the target indication information may be the transmission configuration indicator state information in the embodiment of this application. Based on this, the determining the uplink channel parameter based on the target indication information in step S204 in the embodiment of this application may further include determining second power control parameter information based on the transmission configuration indicator state information, where the second power control parameter information is configured in the transmission configuration indicator state information, or the transmission configuration indicator state information is associated with the second power control parameter information.

Except for the codebook based and non-codebook based scheduling of PUSCH transmission described above, in the embodiment of this application, the target indication information may be the first indication information. Further, in a case that a second power control parameter is associated with the SRS resource configured by the network-side device, the determining the uplink channel parameter based on the target indication information in step S204 in the embodiment of this application includes determining the second power control parameter based on an SRI in DCI in the first indication information.

It should be noted that the second power control parameter information in the embodiment of this application may be at least one of the following: P0, alpha, close loop index, or the like other than pathloss RS.

Optionally, in the embodiment of this application, the target indication information is the transmission configuration indicator state information and the first indication information. In a case that the first indication information is an SRI in DCI and a dummy SRS resource in an association relationship with an uplink channel parameter is configured by the network-side device, the determining the uplink channel parameter based on the target indication information in step S204 in the embodiment of this application may further include the following.

Step S121. Determine beam information of the PUSCH based on the transmission configuration indicator state information.

Step S122. Determine a port quantity and/or precoding information of the PUSCH based on the SRI in the DCI, where the SRI is used to indicate the dummy SRS resource.

That is, dummy SRS resources (dummy SRS resource) are configured by the network. These SRS resources are not sent but only used to associate corresponding PUSCH sending information (information other than beam). The beam information of the PUSCH is still indicated by a TCI state, and the other sending information uses the sending information associated with a dummy SRS resource indicated by an SRI field. It should be noted that a dummy SRS resource may be configured by the network-side device during codebook based scheduling of PUSCH transmission or during non-codebook based scheduling of PUSCH transmission.

Optionally, in a case that an aperiodic SRS resource is configured by the network-side device in the embodiment of this application, the determining the uplink channel parameter based on the target indication information in step S204 in the embodiment of this application includes the following.

Step S131. Determine beam information of the PUSCH based on the transmission configuration indicator state information or based on an SRI in the DCI. The beam information of the aperiodic SRS resource indicated by the SRI is determined based on RRC signaling or a MAC CE command sent by the network-side device or the transmission configuration indicator state information.

Step S132. Determine that a port quantity and/or precoding information associated with the aperiodic SRS resource indicated by the SRI in the DCI, or a port quantity and/or precoding information associated with the transmission configuration indicator state information is a port quantity or precoding information of the PUSCH.

That is, when an aperiodic SRS resource is configured by the network-side device, a beam of the PUSCH can still be updated in a case that these SRSs are not triggered by the network. For example, the network-side device updates the beam information of the aperiodic SRS resource based on RRC, MAC CE, or a TCI field in the DCI, and the beam information of the SRS resource is used as the beam information of the PUSCH. Alternatively, the beam information of the PUSCH may be still indicated by a TCI state, and uplink channel parameters other than the beam information are determined by associating them with the aperiodic SRS resource or with the TCI state indicated by a TCI field.

In this application, whether the PUSCH uses beam information of a latest SRS is not limited.

Optionally, in the embodiment of this application, in a case that the target indication information is the transmission configuration indicator state information, the determining the uplink channel parameter based on the target indication information in step S204 in the embodiment of this application includes determining at least one of the following uplink channel parameters based on the transmission configuration indicator state information: a port quantity, beam information, and precoding information, where the transmission configuration indicator state information is associated with at least one of the port quantity, the beam information, and the precoding information.

That is, in the embodiment of this application, an uplink channel parameter may be determined based only on the transmission configuration indicator state information. In this way, SRI signaling is not required for determining a channel parameter during PUSCH transmission, which saves SRI signaling overhead.

It should be noted that the precoding information in the embodiment of this application is indicated by first signaling in the DCI.

The foregoing descriptions of this application are based on the terminal side. For the network side, an embodiment of this application provides a method for configuring an uplink channel parameter, and the method includes the following steps.

Step S302. A network-side device sends target indication information to a terminal. The target indication information includes at least one of the following: transmission configuration indicator state information and first indication information, and the transmission configuration indicator state information or the first indication information is used for indicating an uplink channel parameter for transmission of a physical uplink shared channel PUSCH.

By using the method according to the embodiment of this application, the network-side device can send the target indication information to a terminal, and then the terminal can determine the uplink channel parameter for transmission of a PUSCH based on the transmission configuration indicator state information and/or the first indication information. This avoids using SRI signaling to determine an uplink channel parameter for transmission of the PUSCH in the prior art, thereby saving SRI signaling overhead and implementing PUSCH scheduling and transmission.

In a case that the PUSCH is a PUSCH scheduled based on a codebook and no sounding reference signal SRS resource is configured by the network-side device, that the target indication information in the embodiment of this application is used to indicate an uplink channel parameter for transmission of a PUSCH includes at least one of the following:

1) the transmission configuration indicator state information being used to indicate beam information in the uplink channel parameter; and
2) the first indication information being used to indicate precoding information in the uplink channel parameter.

It can be learned that the beam information and the precoding information of the PUSCH in the uplink channel parameter can be determined through the foregoing steps, and a port quantity in uplink information may be implemented in the following manners: determining a port quantity of the PUSCH based on the transmission configuration indicator state information, where the transmission configuration indicator state information is associated with the port quantity of the PUSCH; alternatively, determining the port quantity of the PUSCH based on the first indication information or a protocol specification.

It should be noted that a preset mapping is present between the port quantity and a format of the DCI in the embodiment of this application, and the preset mapping is specified by a protocol or configured by the network-side device. In addition, an association relationship is also present between the precoding information and the port quantity in the embodiment of this application.

2) transmission of a PUSCH is scheduled based on a codebook, and an SRS resource is configured by the network side.

In this application scenario, the SRS resource includes at least one of the following:

1) one first SRS resource configured by the network-side device;
2) at least one of a plurality of second SRS resources having a same port quantity and configured by the network-side device;
3) at least one of a plurality of third SRS resources configured by the network-side device, where at least two of the plurality of third SRS resources have different port quantities; and
4) at least one of a plurality of fourth SRS resources configured by the network-side device, where at least two of the plurality of fourth SRS resources have different port quantities; at least one piece of the transmission configuration indicator state information is associated with at least one of the plurality of fourth SRS resources, or at least one of the plurality of fourth SRS resources is configured in at least one piece of the transmission configuration indicator state information.

Based on the foregoing SRS resource, in the embodiment of this application, that the target indication information is used to indicate an uplink channel parameter for transmission of a PUSCH includes at least one of the following:

1) the transmission configuration indicator state information being used to indicate beam information of the PUSCH;
2) the transmission configuration indicator state information or the first indication information being used to indicate an SRS resource;
3) a port quantity of the SRS resource being used to indicate a port quantity of the PUSCH; and
4) the first indication information being used to indicate precoding information.

In an optional implementation of the embodiment of this application, the SRS resource is configured in the transmission configuration indicator state information, or the transmission configuration indicator state information is associated with the SRS resource. Based on this, an association relationship is present between the precoding information and the SRS resource, and beam information of the SRS resource is determined based on the transmission configuration indicator state information.

In an optional implementation of the embodiment of this application, the method according to the embodiment of this application may further include the following steps.

Step S306. Sending configuration information to the terminal in a case that a port quantity of the SRS resource configured by the network-side device does not match the port quantity of the PUSCH, where the configuration information is used for reconfiguration of the port quantity of the SRS resource.

In another optional implementation of the embodiment of this application, that the target indication information is used to indicate an uplink channel parameter for transmission of a PUSCH includes determining at least one of the following uplink channel parameters based on the transmission configuration indicator state information: a port quantity, beam information, and precoding information.

In another optional implementation of the embodiment of this application, that the target indication information is used to indicate an uplink channel parameter includes: the transmission configuration indicator state information being used to indicate beam information of the PUSCH; or the first indication information being used to indicate beam information of the PUSCH.

Further, the first indication information includes an SRI in DCI, and the SRI in the DCI is used to indicate at least one of the beam information of the PUSCH, a port quantity of the PUSCH, and precoding information of the PUSCH.

It should be noted that in a case that a dummy SRS resource in an association relationship with the uplink channel parameter is configured by the network-side device, the SRI in the DCI in the first indication information is used to indicate the dummy SRS resource. It should be noted that a dummy SRS resource may be configured by the network-side device during codebook based scheduling of PUSCH transmission or during non-codebook based scheduling of PUSCH transmission. Further, a port quantity and/or precoding information of the PUSCH may be determined based on the dummy SRS resource indicated by the SRI in the DCI.

In an optional implementation of the embodiment of this application, the method according to the embodiment of this application may further include the following steps.

Step S308. Receive a precoded SRS resource sent by the terminal.

Step S310. Measure the precoded SRS resource, and determine precoding information in DCI based on a measurement result.

The SRS resource includes at least one of the following: 1) an SRS resource associated with a first CSI-RS resource, where a source reference signal RS of the first CSI-RS resource is a source RS in the transmission configuration indicator state information; and 2) an SRS resource associated with a CSI-RS resource in the transmission configuration indicator state information.

In an optional implementation of the embodiment of this application, before the sending target indication information to a terminal, the method according to the embodiment of this application may further include the following steps.

Step S312. Configure a resource pool, where the resource pool includes one or more pieces of transmission configuration indicator state information.

That is, the transmission configuration indicator state information in the embodiment of this application is obtained from the resource pool configured.

In a case that an aperiodic SRS resource is configured by the network-side device, that the target indication information is used to indicate an uplink channel parameter for transmission of a PUSCH includes at least one of the following:

1) the transmission configuration indicator state information being used to indicate beam information of the PUSCH;
2) the transmission configuration indicator state information being associated with at least one of a port quantity and precoding information;
3) the first indication information being used to indicate the beam information of the PUSCH, where an SRI in DCI in the first indication information is used to indicate beam information of the aperiodic SRS resource; and
4) the aperiodic SRS resource being associated with at least one of the port quantity and the precoding information.

It should be noted that the beam information of the aperiodic SRS resource indicated by the SRI is determined based on at least one of the following: RRC signaling or a MAC CE command sent by the network-side device or the transmission configuration indicator state information.

It should be noted that the method for determining or configuring an uplink channel parameter provided by the embodiments of this application may be performed by an apparatus for determining or configuring an uplink channel parameter, or a control module provided in the apparatus for determining an uplink channel parameter and used to implement the method for determining an uplink channel parameter, or a control module provided in the apparatus for configuring an uplink channel parameter and used to implement the method for configuring an uplink channel parameter. The apparatus for determining an uplink channel parameter provided in the embodiment of this application is described by using an example in which the apparatus for determining an uplink channel parameter performs the method for determining an uplink channel parameter in the embodiments of this application.

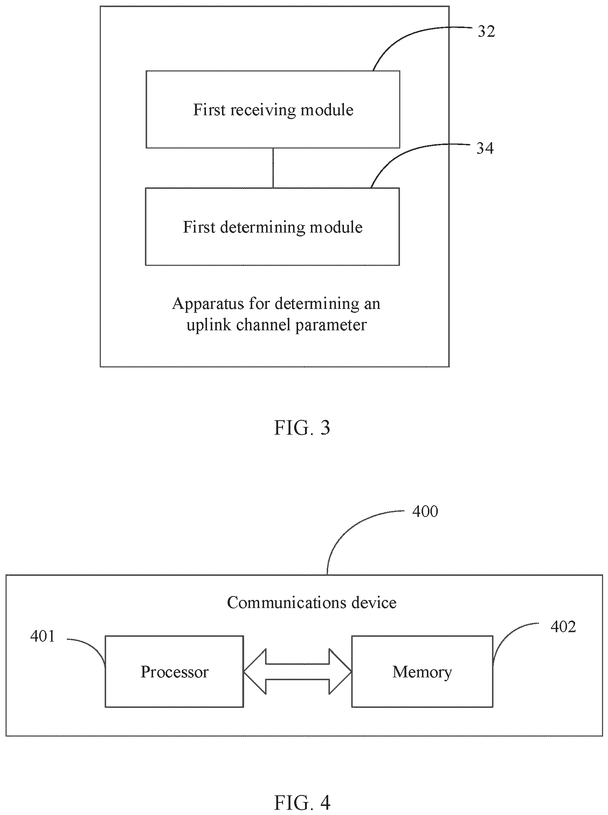

As shown in FIG. 3, an embodiment of this application provides an apparatus for determining an uplink channel parameter. The apparatus includes:

a first receiving module 32, configured to receive target indication information sent by a network-side device, where the target indication information includes at least one of the following: transmission configuration indicator state information and first indication information, and the transmission configuration indicator state information or the first indication information is used to indicate an uplink channel parameter for transmission of a physical uplink shared channel PUSCH; and

a first determining module 34, configured to determine the uplink channel parameter based on the target indication information.

By the use of the apparatus according to the embodiment of this application, an uplink channel parameter for scheduling transmission of a PUSCH can be determined based on transmission configuration indicator state information and/or first indication information. This avoids using SRI signaling to determine an uplink channel parameter required for transmission of the PUSCH in the prior art, thereby saving SRI signaling overhead and implementing PUSCH scheduling and transmission.

Optionally, the first determining module 34 in the embodiment of this application includes at least one of the following: a first determining unit, configured to determine beam information of the PUSCH based on the transmission configuration indicator state information; and a second determining unit, configured to determine precoding information based on the first indication information, where the first indication information includes precoding information in downlink control information DCI.

Optionally, the first determining module 34 in the embodiment of this application may further include a third determining unit, configured to determine a port quantity of the PUSCH based on the transmission configuration indicator state information, where the transmission configuration indicator state information is associated with the port quantity of the PUSCH.

Optionally, the first determining module 34 in the embodiment of this application may further include a fourth determining unit, configured to determine a port quantity of the PUSCH based on the first indication information or a protocol specification.

Optionally, a preset mapping is present between the port quantity and a format of the DCI in the embodiment of this application, and the preset mapping is specified by a protocol or configured by the network-side device.

Optionally, an association relationship is present between the precoding information and the port quantity in the embodiment of this application.

Optionally, in the embodiment of this application, the PUSCH is a PUSCH scheduled based on a codebook, and no sounding reference signal SRS resource is configured by the network-side device.

Optionally, the first determining module 34 in the embodiment of this application includes at least one of the following: a fifth determining unit, configured to determine beam information of the PUSCH based on the transmission configuration indicator state information; a sixth determining unit, configured to determine an SRS resource based on the transmission configuration indicator state information or the first indication information;

a seventh determining unit, configured to determine a port quantity of the PUSCH based on a port quantity of the SRS resource; and an eighth determining unit, configured to determine precoding information based on the first indication information.

Optionally, in the embodiment of this application, the SRS resource is configured in the transmission configuration indicator state information, or the transmission configuration indicator state information is associated with the SRS resource.

Optionally, in the embodiment of this application, the PUSCH is a PUSCH scheduled based on a codebook, and an SRS resource is configured by the network-side device. The SRS resource includes at least one of the following:

1) one first SRS resource configured by the network-side device;
2) at least one of a plurality of second SRS resources having a same port quantity and configured by the network-side device;
3) at least one of a plurality of third SRS resources configured by the network-side device, where at least two of the plurality of third SRS resources have different port quantities; and
4) at least one of a plurality of fourth SRS resources configured by the network-side device, where at least two of the plurality of fourth SRS resources have different port quantities; at least one piece of the transmission configuration indicator state information is associated with at least one of the plurality of fourth SRS resources, or at least one of the plurality of fourth SRS resources is configured in at least one piece of the transmission configuration indicator state information.

Optionally, in the embodiment of this application, an association relationship is present between the precoding information and the SRS resource, and beam information of the SRS resource is determined based on the transmission configuration indicator state information.

Optionally, the apparatus in the embodiment of this application further includes: a second receiving module, configured to receive, before the receiving target indication information sent by a network-side device, configuration information sent by the network-side device in a case that a port quantity of the SRS resource configured by the network-side device does not match the port quantity of the PUSCH, where the configuration information is used to indicate reconfiguration of the port quantity of the SRS resource; or a second determining module, configured to determine, before the receiving target indication information sent by a network-side device, the port quantity of the SRS resource based on a port quantity associated with the transmission configuration indicator state information in the target indication information.

Optionally, in a case that the target indication information is the transmission configuration indicator state information, the first determining module includes: a ninth determining unit, configured to determine at least one of the following uplink channel parameters based on the transmission configuration indicator state information: a port quantity, beam information, and precoding information. The transmission configuration indicator state information is associated with at least one of the port quantity, the beam information, and the precoding information.

Optionally, during non-codebook based scheduling of PUSCH transmission, the target indication information is the transmission configuration indicator state information and the first indication information. The first determining module includes: a tenth determining unit, configured to determine beam information of the PUSCH based on the transmission configuration indicator state information; or an eleventh determining unit, configured to determine beam information of the PUSCH based on the first indication information.

Optionally, the first determining module 34 in the embodiment of this application may further include a twelfth determining unit, configured to determine the beam information of the PUSCH based on an SRI of DCI in the first indication information.

Optionally, the first determining module 34 in the embodiment of this application may further include a thirteenth determining unit, configured to determine at least one of a port quantity and precoding information of the PUSCH based on an SRI in DCI in the first indication information.

Optionally, in the embodiment of this application, in a case that a dummy SRS resource in an association relationship with the uplink channel parameter is configured by the network-side device, an SRI in DCI in the first indication information is used to indicate the dummy SRS resource.

Optionally, the apparatus in the embodiment of this application further includes: a first sending module, configured to send a precoded SRS resource to the network-side device before the determining at least one of a port quantity and precoding information of the PUSCH based on the SRI in the DCI; and a third receiving module, configured to receive the DCI sent by the network-side device, where precoding information in the DCI is obtained through measurement on the precoded SRS resource by the network-side device.

Optionally, in the embodiment of this application, the SRS resource includes at least one of the following: 1) an SRS resource associated with a first CSI-RS resource, where a source reference signal RS of the first CSI-RS resource is a source RS in the transmission configuration indicator state information; and 2) an SRS resource associated with a CSI-RS resource in the transmission configuration indicator state information.

Optionally, in a case that the target indication information is the transmission configuration indicator state information, the first determining module 34 in the embodiment of this application may further include at least one of the following: a fourteenth determining unit, configured to determine that the downlink RS is a reference signal for first power control parameter information in a case that a source RS in the transmission configuration indicator state information is a downlink RS; a fifteenth determining unit, configured to determine that a source RS of the uplink RS or a downlink RS corresponding to the uplink RS is a reference signal for the first power control parameter information in a case that a source RS in the transmission configuration indicator state information is an uplink RS; a sixteenth determining unit, configured to determine that a preset downlink RS is a reference signal for the first power control parameter information in a case that no source RS is present in the transmission configuration indicator state information; and a seventeenth determining unit, configured to determine a reference signal for the first power control parameter information based on a preset mapping relationship and the transmission configuration indicator state information, where the preset mapping relationship is used to indicate a mapping relationship between the transmission configuration indicator state information and the reference signal for the first power control parameter information.

Optionally, in a case that the target indication information is the transmission configuration indicator state information, the first determining module 34 in the embodiment of this application may further include an eighteenth determining unit, configured to determine second power control parameter information based on the transmission configuration indicator state information. The second power control parameter information is configured in the transmission configuration indicator state information, or the transmission configuration indicator state information is associated with the second power control parameter information.

Optionally, in a case that the target indication information is the first indication information and a second power control parameter is associated with an SRS resource configured by the network-side device, the first determining module 34 in the embodiment of this application may further include a nineteenth determining unit, configured to determine the second power control parameter based on an SRI in DCI in the first indication information.

Optionally, in a case that an aperiodic SRS resource is configured by the network-side device, the first determining module 34 in the embodiment of this application further includes: a twentieth determining unit, configured to determine beam information of the PUSCH based on the transmission configuration indicator state information or based on an SRI in the DCI, where the beam information of the aperiodic SRS resource indicated by the SRI is determined based on RRC signaling or a MAC CE command sent by the network-side device or the transmission configuration indicator state information; and a twenty-first determining unit, configured to determine that a port quantity and/or precoding information associated with the aperiodic SRS resource indicated by the SRI in the DCI, or a port quantity and/or precoding information associated with the transmission configuration indicator state information is a port quantity or precoding information of the PUSCH.

For the network side, an embodiment of this application further provides an apparatus for configuring an uplink channel parameter, which is applied to a network-side device. The apparatus includes: a second sending module, configured to send target indication information to a terminal, where the target indication information includes at least one of the following: transmission configuration indicator state information and first indication information, and the transmission configuration indicator state information or the first indication information is used to indicate an uplink channel parameter for transmission of a physical uplink shared channel PUSCH.

Optionally, in the embodiment of this application, that the target indication information is used to indicate an uplink channel parameter for transmission of a PUSCH includes: the transmission configuration indicator state information being used to indicate beam information of the uplink channel parameter; and the first indication information being used to indicate beam information of the uplink channel parameter.

Optionally, in the embodiment of this application, a port quantity is determined in at least one of the following manners: determining based on a port quantity associated with the transmission configuration indicator state information; indicating the port quantity by the first indication information; and specifying the port quantity by a protocol.

Optionally, an association relationship is present between the precoding information and the port quantity in the embodiment of this application.

Optionally, a preset mapping is present between the port quantity and a format of the DCI in the embodiment of this application, and the preset mapping is specified by a protocol or configured by the network-side device.

Optionally, in the embodiment of this application, the PUSCH is a PUSCH scheduled based on a codebook, and no sounding reference signal SRS resource is configured for the terminal by the network-side device.

Optionally, in the embodiment of this application, that the target indication information is used to indicate an uplink channel parameter for transmission of a PUSCH includes at least one of the following: the transmission configuration indicator state information being used to indicate beam information of the PUSCH; the transmission configuration indicator state information or the first indication information being used to indicate an SRS resource; a port quantity of the SRS resource being used to indicate a port quantity of the PUSCH; and the first indication information being used to indicate precoding information.

Optionally, in the embodiment of this application, the SRS resource is configured in the transmission configuration indicator state information, or the transmission configuration indicator state information is associated with the SRS resource.

Optionally, in the embodiment of this application, the PUSCH is a PUSCH scheduled based on a codebook, and an SRS resource is configured by the network-side device. The SRS resource includes at least one of the following:

1) one first SRS resource configured by the network-side device;
2) at least one of a plurality of second SRS resources having a same port quantity and configured by the network-side device;
3) at least one of a plurality of third SRS resources configured by the network-side device, where at least two of the plurality of third SRS resources have different port quantities; and
4) at least one of a plurality of fourth SRS resources configured by the network-side device, where at least two of the plurality of fourth SRS resources have different port quantities; at least one piece of the transmission configuration indicator state information is associated with at least one of the plurality of fourth SRS resources, or at least one of the plurality of fourth SRS resources is configured in at least one piece of the transmission configuration indicator state information.

Optionally, in the embodiment of this application, an association relationship is present between the precoding information and the SRS resource, and beam information of the SRS resource is determined based on the transmission configuration indicator state information.

Optionally, the apparatus in the embodiment of this application may further include: a third sending module, configured to send configuration information to the terminal in a case that a port quantity of the SRS resource configured by the network-side device does not match the port quantity of the PUSCH. The configuration information is used for reconfiguration of the port quantity of the SRS resource.

Optionally, in the embodiment of this application, that the target indication information is used to indicate an uplink channel parameter for transmission of a PUSCH includes determining at least one of the following uplink channel parameters based on the transmission configuration indicator state information: a port quantity, beam information, and precoding information.

Optionally, in the embodiment of this application, that the target indication information is used to indicate an uplink channel parameter includes: the transmission configuration indicator state information being used to indicate beam information of the PUSCH; or the first indication information being used to indicate beam information of the PUSCH.

Optionally, in the embodiment of this application, the first indication information includes an SRI in DCI, and the SRI in the DCI is used to indicate at least one of the beam information of the PUSCH, a port quantity of the PUSCH, and precoding information of the PUSCH.

Optionally, in the embodiment of this application, in a case that a dummy SRS resource in an association relationship with the uplink channel parameter is configured by the network-side device, an SRI in DCI in the first indication information is used to indicate the dummy SRS resource.

Optionally, the apparatus in the embodiment of this application may further include: a fourth receiving module, configured to receive a precoded SRS resource sent by the terminal; and a measurement module, configured to measure the precoded SRS resource, and determine precoding information in the DCI based on a measurement result.

Optionally, in the embodiment of this application, the SRS resource includes at least one of the following: an SRS resource associated with a first CSI-RS resource, where a source reference signal RS of the first CSI-RS resource is a source RS in the transmission configuration indicator state information; and an SRS resource associated with a CSI-RS resource in the transmission configuration indicator state information.

Optionally, the apparatus in the embodiment of this application may further include, a configuration module, configured to configure a resource pool before the sending target indication information to a terminal. The resource pool includes one or more pieces of transmission configuration indicator state information.

Optionally, in the embodiment of this application, in a case that an aperiodic SRS resource is configured by the network-side device, that the target indication information is used to indicate an uplink channel parameter for transmission of a PUSCH includes at least one of the following:

1) the transmission configuration indicator state information being used to indicate beam information of the PUSCH;
2) the transmission configuration indicator state information being associated with at least one of a port quantity and precoding information;
3) the first indication information being used to indicate the beam information of the PUSCH, where an SRI in DCI in the first indication information is used to indicate beam information of the aperiodic SRS resource; and
4) the aperiodic SRS resource, indicated by the SRI in the DCI in the first indication information, being associated with at least one of the port quantity and the precoding information.

Optionally, in the embodiment of this application, the beam information of the aperiodic SRS resource

indicated by the SRI is determined based on at least one of the following: RRC signaling or a MAC CE command sent by the network-side device; or the transmission configuration indicator state information.

In the embodiments of this application, the apparatus for determining an uplink channel parameter and the apparatus for configuring an uplink channel parameter may be an apparatus, or a component, an integrated circuit, or a chip of a terminal. The apparatus may be a mobile terminal or a non-mobile terminal. For example, the mobile terminal may include but is not limited to a type of the foregoing terminal 11, and the non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

In the embodiments of this application, the apparatus for determining an uplink channel parameter and the apparatus for configuring an uplink channel parameter may be apparatuses with an operating system. The operating system may be an Android (Android) operating system, an iOS operating system, or another possible operating system. This is not specifically limited in the embodiments of this application.

The apparatus for determining an uplink channel parameter provided in the embodiment of this application can implement every process implemented by the method embodiment illustrated in FIG. 2, and the same technical effects are achieved. To avoid repetition, details are not described herein again.

Optionally, as shown in FIG. 4, an embodiment of this application further provides a communications device 400, including a processor 401, a memory 402, and a program or instructions stored in the memory 402 and capable of running on the processor 401. For example, in a case that the communications device 400 is a terminal, and the program or instructions are executed by the processor 401, all processes in the foregoing method for determining an uplink channel parameter or the foregoing method for configuring an uplink channel parameter in the embodiments are implemented, and the same technical effects can be achieved. In a case that the communications device 400 is a network-side device, and the program or instructions are executed by the processor 401, all processes in the foregoing method for determining an uplink channel parameter or the foregoing method for configuring an uplink channel parameter in the embodiments are implemented, To avoid repetition, details are not described herein again.

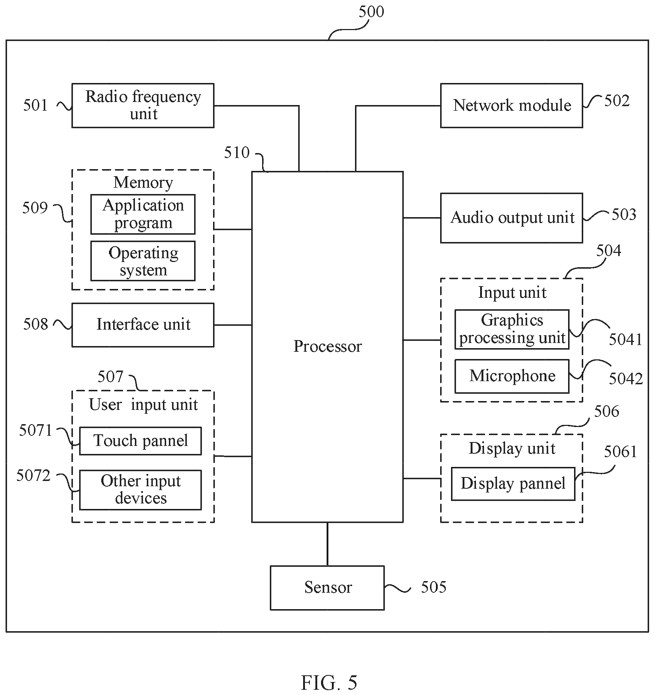

FIG. 5 is a schematic diagram of a hardware structure of a terminal implementing an embodiment of this application.

A terminal 500 includes but is not limited to components such as a radio frequency unit 501, a network module 502, an audio output unit 503, an input unit 504, a sensor 505, a display unit 506, a user input unit 507, an interface unit 508, a memory 509, and a processor 510.

A person skilled in the art can understand that the terminal 500 may further include a power source (such as a battery) for supplying power to the components. The power source may be logically connected to the processor 510 through a power management system. In this way, functions such as charge management, discharge management, and power consumption management are implemented by using the power management system. The structure of the terminal shown in FIG. 5 does not constitute a limitation on the terminal. The terminal may include more or fewer components than those in FIG. 5, or a combination of some components, or components disposed differently. Details are not described herein again.

It should be understood that in the embodiments of this application, the input unit 504 may include a graphics processing unit (Graphics Processing Unit, GPU) 5041 and a microphone 5042. The graphics processing unit 5041 processes image data of a static picture or a video that is obtained by an image capture apparatus (for example, a camera) in a video capture mode or an image capture mode. The display unit 506 may include a display panel 5061. The display panel 5061 may be configured in a form of a liquid crystal display, an organic light-emitting diode, or the like. The user input unit 507 includes a touch panel 5071 and other input devices 5072. The touch panel 5071 is also referred to as a touch screen. The touch panel 5071 may include two parts: a touch detection apparatus and a touch controller. The other input devices 5072 may include but are not limited to a physical keyboard, a functional button (such as a volume control button or a power on/off button), a trackball, a mouse, and a joystick. Details are not described herein.

In the embodiments of this application, the radio frequency circuit 501 receives downlink data from the network-side device for processing by the processor 510, and sends uplink data to the network-side device. Generally, the radio frequency unit 501 includes but is not limited to an antenna, at least one amplifier, a transceiver, a coupler, a low noise amplifier, a duplexer, and the like.

The memory 509 may be configured to store software programs or instructions, and various data. The memory 509 may mainly include a program or instruction storage area and a data storage area. The program or instruction storage area may store an operating system, an application program or instructions required by at least one function (for example, an audio playing function and an image playing function), and the like. In addition, the memory 509 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash storage device, or another volatile solid-state storage device.

The processor 510 may include one or more processing units. Optionally, the processor 510 may integrate an application processor and a modem processor. The application processor mainly processes an operating system, a user interface, an application program or instructions, and the like. The modem processor mainly processes wireless communication, for example, a baseband processor. It should be understood that alternatively, the modem processor may not be integrated into the processor 510.

The radio frequency unit 501 is configured to receive target indication information sent by a network-side device. The target indication information includes at least one of the following: transmission configuration indicator state information and first indication information, and the transmission configuration indicator state information or the first indication information is used to indicate an uplink channel parameter for transmission of a physical uplink shared channel PUSCH.

The processor 510 is configured to determine the uplink channel parameter based on the target indication information.

According to the embodiments of this application, a terminal can determine an uplink channel parameter for transmission of a PUSCH based on transmission configuration indicator state information and/or first indication information. This avoids using SRI signaling to determine an uplink channel parameter for transmission of the PUSCH in the prior art, thereby savng SRI signaling overhead and implementing PUSCH scheduling and transmission.

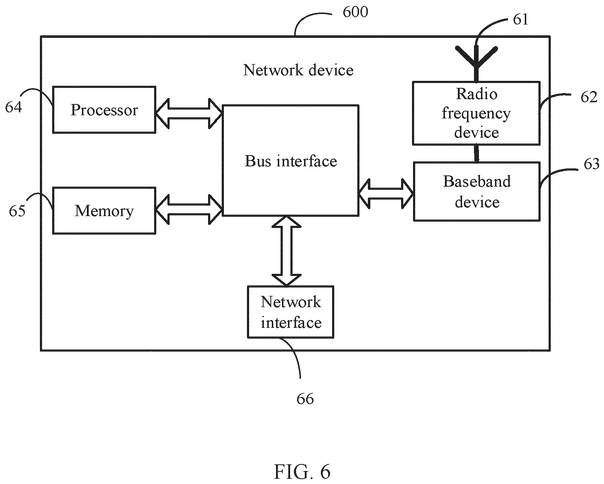

Specifically, an embodiment of this application further provides a network-side device. As shown in FIG. 6, the network device 600 includes an antenna 61, a radio frequency apparatus 62, and a baseband apparatus 63. The antenna 61 is connected to the radio frequency apparatus 62. In an uplink direction, the radio frequency apparatus 62 receives information by using the antenna 61, and transmits the received information to the baseband apparatus 63 for processing. In a downlink direction, the baseband apparatus 63 processes to-be-transmitted information, and transmits the information to the radio frequency apparatus 62; and the radio frequency apparatus 62 processes the received information and then transmits the information by using the antenna 61.

The foregoing frequency band processing apparatus may be located in the baseband apparatus 63. The method performed by the network-side device in the foregoing embodiment may be implemented by the baseband apparatus 63, and the baseband apparatus 63 includes a processor 64 and a memory 65.

The baseband apparatus 63 may include, for example, at least one baseband processing unit, where a plurality of chips are disposed on the baseband processing unit. As shown in FIG. 6, one of the chips is, for example, the processor 64, and connected to the memory 65, to invoke a program in the memory 65 to perform the operations of the network device shown in the foregoing method embodiment.

The baseband apparatus 63 may further include a network interface 66, configured to exchange information with the radio frequency apparatus 62, where the interface is, for example, a common public radio interface (common public radio interface, CPRI).

Specifically, the network-side device according to the embodiment of this application further includes a program or instructions stored in the memory 65 and capable of running on the processor 64. The processor 64 invokes the program or instructions in the memory 65 to perform the method for configuring an uplink channel parameter performed by the network-side device, and the same technical effects are achieved. To avoid repetition, details are not described herein again.

An embodiment of this application further provides a readable storage medium, and the readable storage medium stores a program or instructions. When the program or instructions are executed by a processor, every process in the embodiments of the foregoing methods for determining and configuring an uplink channel parameter is implemented, and the same technical effects are achieved. To avoid repetition, details are not described herein again.

The processor is the processor in the terminal in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface. The communications interface is coupled to the processor, and the processor is configured to run a program or instructions to implement every process in the embodiments of the foregoing methods for determining and configuring an uplink channel parameter, and the same technical effects are achieved. To avoid repetition, details are not described herein again.

It should be understood that the chip mentioned in this embodiment of this application may also be referred to as a system-level chip, a system chip, a chip system, a system-on-chip, or the like.

It should be noted that, in this specification, the terms "include", "comprise", or any of their variants are intended to cover a non-exclusive inclusion, so that a process, a method, an article, or an apparatus that includes a series of elements not only includes those elements but also includes other elements that are not expressly listed, or further includes elements inherent to such a process, method, article, or apparatus. In the absence of more restrictions, an element defined by "including a ..." does not exclude another same element in a process, method, article, or apparatus that includes the element. In addition, it should be noted that the scopes of the method and apparatus in the implementations of this application are not limited to performing functions in the sequence shown or discussed, and may further include performing functions at substantially the same time or in a reverse sequence according to the involved functions. For example, the described method may be performed in a sequence different from the described sequence, and steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

It should be understood that division of modules of the foregoing devices is merely logical function division. The modules may be all or partially integrated in a physical entity or may be physically separate in an actual implementation. The modules may be all implemented in a form of software invoked by a processing component, or may be all implemented in a form of hardware; or a part of modules may be implemented in a form of software invoked by a processing component, and another part of modules may be implemented in a form of hardware. For example, a receiving module may be a processing component that is separately disposed, or may be integrated in a chip of the apparatus for implementation. In addition, the determining module may be stored in the memory of the apparatus in a form of program code, and is invoked by a processing component of the apparatus to perform a function of the receiving module. Implementation of other modules is similar to this. In addition, the modules may be all or partially integrated, or may be implemented independently. Herein, the processing component may be an integrated circuit, and has a signal processing capability. In an implementation process, steps in the foregoing method or the foregoing modules can be implemented by using a hardware integrated logical circuit in the processor component, or by using instructions in a form of software.

For example, a module, a unit, a subunit, or a submodule may be one or more integrated circuits configured to implement the foregoing method, for example, one or more application-specific integrated circuits (Application Specific Integrated Circuit, ASIC), or one or more microprocessors (digital signal processor, DSP), or one or more field programmable gate arrays (Field Programmable Gate Array, FPGA). For another example, when one of the foregoing modules is implemented in a form of program code invoked by a processing component, the processing component may be a general-purpose processor, for example, a central processing unit (Central Processing Unit, CPU) or another processor that may invoke program code. For another example, the modules may be integrated in a form of a system-on-a-chip (system-on-a-chip, SOC) for implementation.

The foregoing describes the embodiments of this application with reference to the accompanying drawings. However, this application is not limited to the foregoing specific embodiments. The foregoing specific embodiments are merely illustrative rather than restrictive. As instructed by this application, a person of ordinary skill in the art may develop many other manners without departing from principles of this application and the protection scope of the claims, and all such manners fall within the protection scope of this application.

## Claims

1. A method for determining an uplink channel parameter, executed by a terminal and comprising:

   receiving target indication information sent by a network-side device, wherein the target indication information comprises at least one of the following: transmission configuration indicator state information and first indication information, and the transmission configuration indicator state information or the first indication information is used to indicate an uplink channel parameter for transmission of a physical uplink shared channel PUSCH; and
   determining the uplink channel parameter based on the target indication information.

2. The method according to claim 1, wherein the determining the uplink channel parameter based on the target indication information comprises at least one of the following:

   determining beam information of the PUSCH based on the transmission configuration indicator state information; and
   determining precoding information based on the first indication information, wherein the first indication information comprises precoding information in downlink control information DCI.

3. The method according to claim 2, wherein the determining the uplink channel parameter based on the target indication information comprises:

determining a port quantity of the PUSCH based on the transmission configuration indicator state information, wherein the transmission configuration indicator state information is associated with the port quantity of the PUSCH.

4. The method according to claim 2, wherein the determining the uplink channel parameter based on the target indication information comprises:
   determining a port quantity of the PUSCH based on the first indication information or a protocol specification.

5. The method according to claim 4, wherein a preset mapping is present between the port quantity and a format of the DCI, and the preset mapping is specified by a protocol or configured by the network-side device.

6. The method according to claim 3 or 4, wherein an association relationship is present between the precoding information and the port quantity.

7. The method according to any one of claims 2 to 5, wherein the PUSCH is a PUSCH scheduled based on a codebook, and no sounding reference signal SRS resource is configured for the terminal by the network-side device.

8. The method according to claim 1, wherein the determining the uplink channel parameter based on the target indication information comprises at least one of the following:

   determining beam information of the PUSCH based on the transmission configuration indicator state information;
   determining an SRS resource based on the transmission configuration indicator state information or the first indication information;
   determining a port quantity of the PUSCH based on a port quantity of the SRS resource; and
   determining precoding information based on the first indication information.

9. The method according to claim 8, wherein the SRS resource is configured in the transmission configuration indicator state information, or the transmission configuration indicator state information is associated with the SRS resource.

10. The method according to claim 8, wherein the PUSCH is a PUSCH scheduled based on a codebook, and an SRS resource is configured by the network-side device, wherein the SRS resource comprises at least one of the following:

   one first SRS resource configured by the network-side device;
at least one of a plurality of second SRS resources having a same port quantity and configured by the network-side device;
at least one of a plurality of third SRS resources configured by the network-side device, wherein at least two of the plurality of third SRS resources have different port quantities; and
at least one of a plurality of fourth SRS resources configured by the network-side device, wherein at least two of the plurality of fourth SRS resources have different port quantities; and at least one piece of the transmission configuration indicator state information is associated with at least one of the plurality of fourth SRS resources, or at least one of the plurality of fourth SRS resources is configured in at least one piece of the transmission configuration indicator state information.

11. The method according to claim 10, wherein an association relationship is present between the precoding information and the SRS resource, and beam information of the SRS resource is determined based on the transmission configuration indicator state information.

12. The method according to any one of claims 8 to 11, wherein before the receiving target indication information sent by a network-side device, the method further comprises:

in a case that a port quantity of the SRS resource configured by the network-side device does not match the port quantity of the PUSCH, receiving configuration information sent by the network-side device, wherein the configuration information is used to indicate reconfiguration of the port quantity of the SRS resource; or
determining the port quantity of the SRS resource based on a port quantity associated with the transmission configuration indicator state information in the target indication information.

13. The method according to claim 1, wherein in a case that the target indication information is the transmission configuration indicator state information, the determining the uplink channel parameter based on the target indication information comprises:

determining at least one of the following uplink channel parameters based on the transmission configuration indicator state information: a port quantity, beam information, and precoding information; wherein
the transmission configuration indicator state information is associated with at least one of the port quantity, the beam information, and the precoding information.

14. The method according to claim 1, wherein during non-codebook based scheduling of PUSCH transmission, the target indication information is the transmission configuration indicator state information and the first indication information, and the determining the uplink channel parameter based on the target indication information comprises:

determining beam information of the PUSCH based on the transmission configuration indicator state information; or
determining beam information of the PUSCH based on the first indication information.

15. The method according to claim 14, wherein the determining beam information of the PUSCH based on the first indication information comprises:
determining the beam information of the PUSCH based on a sounding reference signal resource indicator SRI of DCI in the first indication information.

16. The method according to claim 14, wherein the determining the uplink channel parameter based on the target indication information further comprises:
determining at least one of a port quantity and precoding information of the PUSCH based on an SRI of DCI in the first indication information.

17. The method according to claim 1, wherein in a case that a dummy SRS resource in an association relationship with the uplink channel parameter is configured by the network-side device, an SRI of DCI in the first indication information is used to indicate the dummy SRS resource.

18. The method according to claim 16, wherein before the determining at least one of a port quantity and precoding information of the PUSCH based on the SRI in the DCI, the method further comprises:

sending a precoded SRS resource to the network-side device; and
receiving the DCI sent by the network-side device, wherein precoding information in the DCI is obtained through measurement on the precoded SRS resource by the network-side device.

19. The method according to claim 18, wherein the SRS resource comprises at least one of the following:

an SRS resource associated with a first channel state information reference signal CSI-RS resource, wherein a source reference signal RS of the first CSI-RS resource is a source RS in the transmission configuration indicator state information; and

an SRS resource associated with a CSI-RS resource in the transmission configuration indicator state information.

20. The method according to claim 1, wherein in a case that the target indication information is the transmission configuration indicator state information, the determining the uplink channel parameter based on the target indication information comprises at least one of the following:

determining that a downlink RS is a reference signal for first power control parameter information in a case that a source RS in the transmission configuration indicator state information is the downlink RS;

determining that a source RS of the uplink RS or a downlink RS corresponding to the uplink RS is a reference signal for the first power control parameter information in a case that a source RS in the transmission configuration indicator state information is an uplink RS;

determining that a preset downlink RS is a reference signal for the first power control parameter information in a case that no source RS is present in the transmission configuration indicator state information; and

determining a reference signal for the first power control parameter information based on a preset mapping relationship and the transmission configuration indicator state information, wherein the preset mapping relationship is used to indicate a mapping relationship between the transmission configuration indicator state information and the reference signal for the first power control parameter information.

21. The method according to claim 1, wherein in a case that the target indication information is the transmission configuration indicator state information, the determining the uplink channel parameter based on the target indication information comprises:

determining second power control parameter information based on the transmission configuration indicator state information, wherein the second power control parameter information is configured in the transmission configuration indicator state information, or the transmission configuration indicator state information is associated with the second power control parameter information.

22. The method according to claim 1, wherein in a case that the target indication information is the first indication information and a second power control parameter is associated with an SRS resource configured by the network-side device, the determining the uplink channel parameter based on the target indication information comprises:

determining the second power control parameter based on an SRI of DCI in the first indication information.

23. The method according to claim 1, wherein in a case that an aperiodic SRS resource is configured by the network-side device, the determining the uplink channel parameter based on the target indication information comprises:

determining beam information of the PUSCH based on the transmission configuration indicator state information or based on an SRI in the DCI, wherein the beam information of the aperiodic SRS resource indicated by the SRI is determined based on RRC signaling or a MAC CE command sent by the network-side device or the transmission configuration indicator state information; and

determining that a port quantity and/or precoding information associated with the aperiodic SRS resource indicated by the SRI in the DCI, or a port quantity and/or precoding information associated with the transmission configuration indicator state information is a port quantity or precoding information of the PUSCH.

24. A method for configuring an uplink channel parameter, executed by a network-side device and comprising:

sending target indication information to a terminal, wherein the target indication information comprises at least one of the following: transmission configuration indicator state information and first indication information, and the transmission configuration indicator state information or the first indication information is used to indicate an uplink channel parameter for transmission of a physical uplink shared channel PUSCH.

25. The method according to claim 24, wherein that the target indication information is used to indicate an uplink channel parameter for transmission of a PUSCH comprises at least one of the following:

the transmission configuration indicator state information being used to indicate beam information in the uplink channel parameter; and

the first indication information being used to indicate precoding information in the uplink channel parameter.

26. The method according to claim 25, wherein a port quantity is determined in at least one of the following manners:

determining based on a port quantity associated with the transmission configuration indicator state information;
indicating the port quantity by the first indication information; and
specifying the port quantity by a protocol.

27. The method according to claim 26, wherein an association relationship is present between the precoding information and the port quantity.

28. The method according to claim 26, wherein a preset mapping is present between the port quantity and a format of the DCI, and the preset mapping is specified by a protocol or configured by the network-side device.

29. The method according to any one of claims 25 to 28, wherein the PUSCH is a PUSCH scheduled based on a codebook, and no sounding reference signal SRS resource is configured for the terminal by the network-side device.

30. The method according to claim 24, wherein that the target indication information is used to indicate an uplink channel parameter for transmission of a PUSCH comprises at least one of the following:

the transmission configuration indicator state information being used to indicate beam information of the PUSCH;
the transmission configuration indicator state information or the first indication information being used to indicate an SRS resource;
a port quantity of the SRS resource being used to indicate a port quantity of the PUSCH; and
the first indication information being used to indicate precoding information.

31. The method according to claim 30, wherein the SRS resource is configured in the transmission configuration indicator state information, or the transmission configuration indicator state information is associated with the SRS resource.

32. The method according to claim 30, wherein the PUSCH is a PUSCH scheduled based on a codebook, and an SRS resource is configured by the network-side device, wherein the SRS resource comprises at least one of the following:

one first SRS resource configured by the network-side device;
at least one of a plurality of second SRS resources having a same port quantity and configured by the network-side device;
at least one of a plurality of third SRS resources configured by the network-side device, wherein at least two of the plurality of third SRS resources have different port quantities; and
at least one of a plurality of fourth SRS resources configured by the network-side device, wherein at least two of the plurality of fourth SRS resources have different port quantities; at least one piece of the transmission configuration indicator state information is associated with at least one of the plurality of fourth SRS resources, or at least one of the plurality of fourth SRS resources is configured in at least one piece of the transmission configuration indicator state information.

33. The method according to claim 32, wherein an association relationship is present between the precoding information and the SRS resource, and beam information of the SRS resource is determined based on the transmission configuration indicator state information.

34. The method according to any one of claims 30 to 33, further comprising:
sending configuration information to the terminal in a case that a port quantity of the SRS resource configured by the network-side device does not match the port quantity of the PUSCH, wherein the configuration information is used for reconfiguration of the port quantity of the SRS resource.

35. The method according to claim 24, wherein that the target indication information is used to indicate an uplink channel parameter for transmission of a PUSCH comprises:
determining at least one of the following uplink channel parameters based on the transmission configuration indicator state information: a port quantity, beam information, and precoding information.

36. The method according to claim 24, wherein that the target indication information is used to indicate an uplink channel parameter for transmission of a PUSCH comprises:

the transmission configuration indicator state information being used to indicate beam information of the PUSCH; or
the first indication information being used to indicate beam information of the PUSCH.

37. The method according to claim 36, wherein the first indication information comprises an SRI in DCI, and the SRI in the DCI is used to indicate at least one of the beam information of the PUSCH, a port quantity of the PUSCH, and precoding information of the PUSCH.

38. The method according to claim 24, wherein in a case that a dummy SRS resource in an association relationship with the uplink channel parameter is configured by the network-side device, an SRI of DCI in the first indication information is used to indicate the dummy SRS resource.

39. The method according to claim 36, further comprising:

receiving a precoded SRS resource sent by the terminal; and
measuring the precoded SRS resource, and determining precoding information in DCI based on a measurement result.

40. The method according to claim 39, wherein the SRS resource comprises at least one of the following:

an SRS resource associated with a first CSI-RS resource, wherein a source reference signal RS of the first CSI-RS resource is a source RS in the transmission configuration indicator state information; and
an SRS resource associated with a CSI-RS resource in the transmission configuration indicator state information.

41. The method according to claim 24, wherein before the sending target indication information to a terminal, the method further comprises:
configuring a resource pool, wherein the resource pool comprises one or more pieces of transmission configuration indicator state information.

42. The method according to claim 24, wherein in a case that an aperiodic SRS resource is configured by the network-side device, that the target indication information is used to indicate an uplink channel parameter for transmission of a PUSCH comprises at least one of the following:

the transmission configuration indicator state information being used to indicate beam information of the PUSCH;
the transmission configuration indicator state information being associated with at least one of a port quantity and precoding information;
the first indication information being used to indicate the beam information of the PUSCH, wherein an SRI of DCI in the first indication information is used to indicate beam information of the aperiodic SRS resource; and
the aperiodic SRS resource being associated with at least one of the port quantity and the precoding information.

43. The method according to claim 42, wherein the beam information of the aperiodic SRS resource indicated by the SRI is determined based on at least one of the following:

RRC signaling or MAC CE signaling sent by the network-side device; and
the transmission configuration indicator state information.

44. An apparatus for determining an uplink channel parameter, comprising:

a first receiving module, configured to receive target indication information sent by a network-side device, wherein the target indication information comprises at least one of the following: transmission configuration indicator state information and first indication information, and the transmission configuration indicator state information or the first indication information is used to indicate an uplink channel parameter for transmission of a physical uplink shared channel PUSCH; and
a first determining module, configured to determine the uplink channel parameter based on the target indication information.

45. The apparatus according to claim 44, wherein the first determining module comprises at least one of the following:

a first determining unit, configured to determine beam information of the PUSCH based on the transmission configuration indicator state information; and
a second determining unit, configured to determine precoding information based on the first indication information, wherein the first indication information comprises precoding information in downlink control information DCI.

46. The apparatus according to claim 45, wherein the first determining module comprises:
a third determining unit, configured to determine a port quantity of the PUSCH based on the transmission configuration indicator state information, wherein the transmission configuration indicator state information is associated with the port quantity of the PUSCH.

47. The apparatus according to claim 45, wherein the first determining module comprises:
a fourth determining unit, configured to determine a port quantity of the PUSCH based on the first indication information or a protocol specification.

48. The apparatus according to claim 47, wherein a preset mapping is present between the port quantity and a format of the DCI, and the preset mapping is specified by a protocol or configured by the network-side device.

**49.** The apparatus according to claim 47 or 48, wherein an association relationship is present between the precoding information and the port quantity.

**50.** The apparatus according to any one of claims 45 to 48, wherein the PUSCH is a PUSCH scheduled based on a codebook, and no sounding reference signal SRS resource is configured by the network-side device.

**51.** The apparatus according to claim 44, wherein the first determining module comprises at least one of the following:

a fifth determining unit, configured to determine beam information of the PUSCH based on the transmission configuration indicator state information;
a sixth determining unit, configured to determine an SRS resource based on the transmission configuration indicator state information or the first indication information;
a seventh determining unit, configured to determine a port quantity of the PUSCH based on a port quantity of the SRS resource; and
an eighth determining unit, configured to determine precoding information based on the first indication information.

**52.** The apparatus according to claim 51, wherein the SRS resource is configured in the transmission configuration indicator state information, or the transmission configuration indicator state information is associated with the SRS resource.

**53.** The apparatus according to claim 51, wherein the PUSCH is a PUSCH scheduled based on a codebook, and an SRS resource is configured by the network-side device, wherein the SRS resource comprises at least one of the following:

one first SRS resource configured by the network-side device;
at least one of a plurality of second SRS resources having a same port quantity and configured by the network-side device;
at least one of a plurality of third SRS resources configured by the network-side device, wherein at least two of the plurality of third SRS resources have different port quantities; and
at least one of a plurality of fourth SRS resources configured by the network-side device, wherein at least two of the plurality of fourth SRS resources have different port quantities; at least one piece of the transmission configuration indicator state information is associated with at least one of the plurality of fourth SRS resources, or at least one of the plurality of fourth SRS resources is configured in at least one piece of the transmission configuration indicator state information.

**54.** The apparatus according to claim 53, wherein an association relationship is present between the precoding information and the SRS resource, and beam information of the SRS resource is determined based on the transmission configuration indicator state information.

**55.** The apparatus according to any one of claims 51 to 54, further comprising:

a second receiving module, configured to receive, before the receiving target indication information sent by a network-side device, configuration information sent by the network-side device in a case that a port quantity of the SRS resource configured by the network-side device does not match the port quantity of the PUSCH, wherein the configuration information is used to indicate reconfiguration of the port quantity of the SRS resource; or
a second determining module, configured to determine, before the receiving target indication information sent by a network-side device, the port quantity of the SRS resource based on a port quantity associated with the transmission configuration indicator state information in the target indication information.

**56.** The apparatus according to claim 44, wherein in a case that the target indication information is the transmission configuration indicator state information, the first determining module comprises:

a ninth determining unit, configured to determine at least one of the following uplink channel parameters based on the transmission configuration indicator state information: a port quantity, beam information, and precoding information; wherein
the transmission configuration indicator state information is associated with at least one of the port quantity, the beam information, and the precoding information.

**57.** The apparatus according to claim 44, wherein during non-codebook based scheduling of PUSCH transmission, the target indication information is the transmission configuration indicator state information and the first indication information, and the first determining module comprises:

a tenth determining unit, configured to determine beam information of the PUSCH based on the transmission configuration indicator state information; or

an eleventh determining unit, configured to determine beam information of the PUSCH based on the first indication information.

58. The apparatus according to claim 57, wherein the first determining module comprises:
a twelfth determining unit, configured to determine the beam information of the PUSCH based on an SRI of DCI in the first indication information.

59. The apparatus according to claim 57, wherein the first determining module comprises:
a thirteenth determining unit, configured to determine at least one of a port quantity and precoding information of the PUSCH based on an SRI of DCI in the first indication information.

60. The apparatus according to claim 44, wherein in a case that a dummy SRS resource in an association relationship with the uplink channel parameter is configured by the network-side device, an SRI of DCI in the first indication information is used to indicate the dummy SRS resource.

61. The apparatus according to claim 59, further comprising:

a first sending module, configured to send a precoded SRS resource to the network-side device before the determining at least one of a port quantity and precoding information of the PUSCH based on the SRI in the DCI; and
a third receiving module, configured to receive the DCI sent by the network-side device, wherein precoding information in the DCI is obtained through measurement on the precoded SRS resource by the network-side device.

62. The apparatus according to claim 61, wherein the SRS resource comprises at least one of the following:

an SRS resource associated with a first CSI-RS resource, wherein a source reference signal RS of the first CSI-RS resource is a source RS in the transmission configuration indicator state information; and
an SRS resource associated with a CSI-RS resource in the transmission configuration indicator state information.

63. The apparatus according to claim 44, wherein in a case that the target indication information is the transmission configuration indicator state information, the first determining module comprises at least one of the following:

a fourteenth determining unit, configured to determine that the downlink RS is a reference signal for first power control parameter information in a case that a source RS in the transmission configuration indicator state information is a downlink RS;
a fifteenth determining unit, configured to determine that a source RS of the uplink RS or a downlink RS corresponding to the uplink RS is a reference signal for the first power control parameter information in a case that a source RS in the transmission configuration indicator state information is an uplink RS;
a sixteenth determining unit, configured to determine that a preset downlink RS is a reference signal for the first power control parameter information in a case that no source RS is present in the transmission configuration indicator state information; and
a seventeenth determining unit, configured to determine a reference signal for the first power control parameter information based on a preset mapping relationship and the transmission configuration indicator state information, wherein the preset mapping relationship is used to indicate a mapping relationship between the transmission configuration indicator state information and the reference signal for the first power control parameter information.

64. The apparatus according to claim 44, wherein in a case that the target indication information is the transmission configuration indicator state information, the first determining module comprises:
an eighteenth determining unit, configured to determine second power control parameter information based on the transmission configuration indicator state information, wherein the second power control parameter information is configured in the transmission configuration indicator state information, or the transmission configuration indicator state information is associated with the second power control parameter information.

65. The apparatus according to claim 44, wherein in a case that the target indication information is the first indication information and a second power control parameter is associated with an SRS resource configured by the network-side device, the first determining module comprises:
a nineteenth determining unit, configured to determine the second power control parameter based on an SRI of DCI in the first indication information.

66. The apparatus according to claim 44, wherein in a case that an aperiodic SRS resource is configured by the network-side device, the first determining module comprises:

a twentieth determining unit, configured to determine beam information of the PUSCH based on the transmission configuration indicator state information or based on an SRI in the DCI, wherein the beam information of the aperiodic SRS resource indicated by the SRI is determined based on RRC signaling or a MAC CE command sent by the network-side device or the transmission configuration indicator state information; and

a twenty-first determining unit, configured to determine that a port quantity and/or precoding information associated with the aperiodic SRS resource indicated by the SRI in the DCI, or a port quantity and/or precoding information associated with the transmission configuration indicator state information is a port quantity or precoding information of the PUSCH.

67. An apparatus for configuring an uplink channel parameter, comprising:
a second sending module, configured to send target indication information to a terminal, wherein the target indication information comprises at least one of the following: transmission configuration indicator state information and first indication information, and the transmission configuration indicator state information or the first indication information is used to indicate an uplink channel parameter for transmission of a physical uplink shared channel PUSCH.

68. The apparatus according to claim 67, wherein that the target indication information is used to indicate an uplink channel parameter for transmission of a PUSCH comprises at least one of the following:

the transmission configuration indicator state information being used to indicate beam information in the uplink channel parameter; and
the first indication information being used to indicate precoding information in the uplink channel parameter.

69. The apparatus according to claim 68, wherein a port quantity is determined in at least one of the following manners:

determining based on a port quantity associated with the transmission configuration indicator state information;
indicating the port quantity by the first indication information; and
specifying the port quantity by a protocol.

70. The apparatus according to claim 69, wherein an association relationship is present between the precoding information and the port quantity.

71. The apparatus according to claim 69, wherein a preset mapping is present between the port quantity and a format of the DCI, and the preset mapping is specified by a protocol or configured by the network-side device.

72. The apparatus according to any one of claims 68 to 71, wherein the PUSCH is a PUSCH scheduled based on a codebook, and no sounding reference signal SRS resource is configured for the terminal by the network-side device.

73. The apparatus according to claim 67, wherein that the target indication information is used to indicate an uplink channel parameter for transmission of a PUSCH comprises at least one of the following:

the transmission configuration indicator state information being used to indicate beam information of the PUSCH;
the transmission configuration indicator state information or the first indication information being used to indicate an SRS resource;
a port quantity of the SRS resource being used to indicate a port quantity of the PUSCH; and
the first indication information being used to indicate precoding information.

74. The apparatus according to claim 73, wherein the SRS resource is configured in the transmission configuration indicator state information, or the transmission configuration indicator state information is associated with the SRS resource.

75. The apparatus according to claim 73, wherein the PUSCH is a PUSCH scheduled based on a codebook, and an SRS resource is configured by the network-side device, wherein the SRS resource comprises at least one of the following:

one first SRS resource configured by the network-side device;
at least one of a plurality of second SRS resources having a same port quantity and configured by the network-side device;
at least one of a plurality of third SRS resources configured by the network-side device, wherein at least two of the plurality of third SRS resources have different port quantities; and
at least one of a plurality of fourth SRS resources configured by the network-side device, wherein at least two of the plurality of fourth SRS resources have different port quantities; at least one piece of the transmission configuration indicator state information is associated with at least one of the plurality of fourth SRS resources, or at least one of the plurality of fourth SRS resources is configured in at least one piece of the transmission configuration indicator state information.

76. The apparatus according to claim 75, wherein an association relationship is present between the precoding information and the SRS resource, and beam information of the SRS resource is determined based on the transmission configuration indicator state information.

77. The apparatus according to any one of claims 73 to 76, further comprising:
a third sending module, configured to send configuration information to the terminal in a case that a port quantity of the SRS resource configured by the network-side device does not match the port quantity of the PUSCH, wherein the configuration information is used for reconfiguration of the port quantity of the SRS resource.

78. The apparatus according to claim 67, wherein that the target indication information is used to indicate an uplink channel parameter for transmission of a PUSCH comprises:
determining at least one of the following uplink channel parameters based on the transmission configuration indicator state information: a port quantity, beam information, and precoding information.

79. The apparatus according to claim 67, wherein that the target indication information is used to indicate an uplink channel parameter comprises:

the transmission configuration indicator state information being used to indicate beam information of the PUSCH; or
the transmission configuration indicator state information being used to indicate beam information of the PUSCH.

80. The apparatus according to claim 79, wherein the first indication information comprises an SRI in DCI, and the SRI in the DCI is used to indicate at least one of the beam information of the PUSCH, a port quantity of the PUSCH, and precoding information of the PUSCH.

81. The apparatus according to claim 67, wherein in a case that a dummy SRS resource in an association relationship with the uplink channel parameter is configured by the network-side device, an SRI of DCI in the first indication information is used to indicate the dummy SRS resource.

82. The apparatus according to claim 79, further comprising:

a fourth receiving module, configured to receive a precoded SRS resource sent by the terminal; and
a measurement module, configured to measure the precoded SRS resource, and determine precoding information in DCI based on a measurement result.

83. The apparatus according to claim 82, wherein the SRS resource comprises at least one of the following:

an SRS resource associated with a first CSI-RS resource, wherein a source reference signal RS of the first CSI-RS resource is a source RS in the transmission configuration indicator state information; and
an SRS resource associated with a CSI-RS resource in the transmission configuration indicator state information.

84. The apparatus according to claim 67, further comprising:
a configuration module, configured to configure a resource pool before the sending target indication information to a terminal, wherein the resource pool comprises one or more pieces of transmission configuration indicator state information.

85. The apparatus according to claim 67, wherein in a case that an aperiodic SRS resource is configured by the network-side device, that the target indication information is used to indicate an uplink channel parameter for transmission of a PUSCH comprises at least one of the following:

the transmission configuration indicator state information being used to indicate beam information of the PUSCH;
the transmission configuration indicator state information being associated with at least one of a port quantity and precoding information;
the first indication information being used to indicate the beam information of the PUSCH, wherein an SRI of DCI in the first indication information is used to indicate beam information of the aperiodic SRS resource; and
the aperiodic SRS resource, indicated by the SRI of the DCI in the first indication information, being associated with at least one of the port quantity and the precoding information.

86. The apparatus according to claim 85, wherein the beam information of the aperiodic SRS resource indicated by the SRI is determined based on at least one of the following:

RRC signaling or MAC CE signaling sent by the network-side device; and
the transmission configuration indicator state information.

87. A terminal, comprising a processor, a memory, and a program or instructions stored in the memory and capable of running on the processor, wherein when the program or instructions are executed by the processor, the steps of the method for determining an uplink channel parameter according to any one of claims 1 to 23 are implemented.

88. A network-side device, comprising a processor, a memory, and a program or instructions stored in the memory and capable of running on the processor, wherein when the program or instructions are executed by the processor, the steps of the method for configuring an uplink channel parameter according to any one of claims 24 to 43 are implemented.

89. A readable storage medium, wherein the readable storage medium stores a program or instructions, and when the program or instructions are executed by a processor, the steps of the method for determining an uplink channel parameter according to any one of claims 1 to 23 or the steps of the method for configuring an uplink channel parameter according to any one of claims 24 to 43 are implemented.

90. A chip, comprising a processor and a communication interface, wherein the communication interface is coupled to the processor, and the processor is configured to run a program or instructions to implement the steps of the method for determining an uplink channel parameter according to any one of claims 1 to 23 or the steps of the method for configuring an uplink channel parameter according to any one of claims 24 to 43.

91. A computer program product, stored in a readable storage medium, wherein the computer program product is executed by at least one processor to implement the steps of the method for determining an uplink channel parameter according to any one of claims 1 to 23, or the steps of the method for configuring an uplink channel parameter according to any one of claims 24 to 43.

92. An apparatus for determining an uplink channel parameter, configured to implement the steps of the method for determining an uplink channel parameter according to any one of claims 1 to 23.

93. An apparatus for configuring an uplink channel parameter, configured to implement the steps of the method for configuring an uplink channel parameter according to any one of claims 24 to 43.

12

Network-side device

11

11

Terminal

Terminal

FIG. 1

| |
| Receive target indication information sent by a network-side device, where the target indication information includes at least one of the following: transmission configuration indicator state information and first indication information, and the transmission configuration indicator state information or the first indication information is used to indicate an uplink channel parameter for transmission on a physical uplink shared channel PUSCH |

S202

| |
| Determine the uplink channel parameter based on the target indication information |

S204

FIG. 2

First receiving module — 32

First determining module — 34

Apparatus for determining an
uplink channel parameter

FIG. 3

— 400

Communications device

401 — Processor ⟷ Memory — 402

FIG. 4

FIG. 5

600

61

Network device

64 — Processor

65 — Memory

Bus interface

Network
interface

66

Radio
frequency
device — 62

Baseband
device — 63

FIG. 6

## INTERNATIONAL SEARCH REPORT

| International application No. |
|---|
| **PCT/CN2021/121659** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

EPODOC, WPI, CNPAT, CNKI, 3GPP: 传输配置指示, 波束, 预编码, 端口, 码本, 非码本, 探测参考信号资源指示, 下行控制信息, 物理上行共享信道, TCI, beam, precode, port, codebook, non-codebook, DCI, SRI

### C. DOCUMENTS CONSIDERED TO BE RELEVANT

| Category* | Citation of document, with indication, where appropriate, of the relevant passages | Relevant to claim No. |
|---|---|---|
| X | WO 2020162735 A1 (LG ELECTRONICS INC.) 13 August 2020 (2020-08-13) description, paragraphs [490]-[673], and figures 19-33 | 1-93 |
| X | US 2019261338 A1 (QUALCOMM INC.) 22 August 2019 (2019-08-22) description, paragraphs [0108]-[0213], and figures 1-17 | 1-93 |
| X | CN 111278120 A (VIVO COMMUNICATION TECHNOLOGY CO., LTD.) 12 June 2020 (2020-06-12) description, paragraphs [0056]-[0435], and figures 1-8 | 1-93 |
| X | CN 110535614 A (ZTE CORPORATION) 03 December 2019 (2019-12-03) description, paragraphs [0044]-[0462], and figures 1-6 | 1-93 |
| X | CN 111224698 A (LONGBO COMMUNICATION TECHNICAL CO., LTD.) 02 June 2020 (2020-06-02) description, paragraphs [0187]-[0675], and figures 1-24 | 1-93 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 December 2021** | **30 December 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/121659**

| Patent document cited in search report | | | Publication date (day/month/year) | Patent family member(s) | | | Publication date (day/month/year) |
|---|---|---|---|---|---|---|---|
| WO | 2020162735 | A1 | 13 August 2020 | None | | | |
| US | 2019261338 | A1 | 22 August 2019 | WO | 2019161132 | A1 | 22 August 2019 |
| | | | | SG | 11202006801 R | A | 28 August 2020 |
| | | | | KR | 20200121809 | A | 26 October 2020 |
| | | | | CN | 111699634 | A | 22 September 2020 |
| | | | | BR | 112020016594 | A2 | 15 December 2020 |
| | | | | EP | 3753132 | A1 | 23 December 2020 |
| | | | | TW | 201937972 | A | 16 September 2019 |
| | | | | AU | 2019222468 | A1 | 13 August 2020 |
| | | | | JP | 2021514134 | A | 03 June 2021 |
| CN | 111278120 | A | 12 June 2020 | EP | 3911075 | A1 | 17 November 2021 |
| | | | | US | 2021336664 | A1 | 28 October 2021 |
| | | | | WO | 2020143526 | A1 | 16 July 2020 |
| | | | | KR | 20210109628 | A | 06 September 2021 |
| | | | | SG | 11202107582 X | A | 30 August 2021 |
| CN | 110535614 | A | 03 December 2019 | WO | 2021043008 | A1 | 11 March 2021 |
| CN | 111224698 | A | 02 June 2020 | WO | 2020103741 | A1 | 28 May 2020 |
| | | | | US | 2021273712 | A1 | 02 September 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011063406